# EUROPÄISCHE PATENTSCHRIFT

(11) **EP 1 089 893 B1**
(45) Veröffentlichungstag und Bekanntmachung des Hinweises auf die Patenterteilung: **17.03.2004**
(21) Anmeldenummer: 99964406.5
(22) Anmeldetag: 04.12.1999
(51) Int. Cl.: B60K 26/02

(54) **PEDALWERTGEBERANORDNUNG**
ARRANGEMENT OF A PEDAL VALUE GENERATOR
ENSEMBLE DE TRANSMISSION DE VALEURS D'ACCELERATION A PARTIR DE LA PEDALE D'ACCELERATION

(30) Priorität: 22.04.1999 DE 19918119
(43) Veröffentlichungstag der Anmeldung: 11.04.2001
(73) Patentinhaber: ROBERT BOSCH GMBH, 70442 Stuttgart (DE)
(72) Erfinder: MARQUARDT, Werner-Karl, D-71706 Markgröningen (DE); VELTE, Uwe, D-77833 Ottersweier (DE); MAENNLE, Erik, D-77704 Oberkirch (DE)
(86) Internationale Anmeldenummer: PCT/DE1999/003890
(87) Internationale Veröffentlichungsnummer: WO 2000/064696

(56) Entgegenhaltungen:
- EP-A- 0 739 771
- EP-A- 0 899 146
- DE-A- 4 422 232

## Beschreibung

### Stand der Technik

Die Erfindung betrifft eine Pedalwertgeberanordnung nach Anspruch 1 oder 8.

Die deutsche Offenlegungsschrift DE 34 11 455 A1 zeigt eine in einem Gehäuse drehbar gelagerte Geberwelle, die vom Fahrpedal eines Kraftfahrzeugs gegen eine Rückstellfederanordnung verdrehbar ist. Zur Erfassung der Pedalstellung wirkt die Geberwelle mit einem Drehwinkelsensor zusammen, der ein elektrisches Pedalwertsignal liefert, das der Stellung des Fahrpedals und damit der gewünschten Fahrleistung entspricht.

Bei Kraftfahrzeugen, insbesondere bei Kraftfahrzeugen mit automatischem Schaltgetriebe, ist es häufig erforderlich, daß bei kräftigem Durchtreten des Fahrpedals ein elektrisches Schaltsignal erzeugt wird, insbesondere damit beim Beschleunigen auf die nächstniedrige Fahrstufe elektrisch umgeschaltet wird. Hierfür wird ein entsprechendes Schaltsignal benötigt. Dieses Schaltsignal wird beim Überdrücken über einen bestimmten Drehwinkel des Pedals durch einen elektrischen Schaltkontakt erzeugt. Um ein ungewolltes Zurückschalten zu vermeiden, muß dem elektrischen Schaltpunkt ein mechanischer Widerstand, also ein deutlich spürbarer Anstieg der Reaktionskraft am Fahrpedal vorausgehen. Ein derartiger Schaltpunkt wird häufig auch als Kick-Down-Schaltung bezeichnet. Bei der genannten Veröffentlichung sind hierzu in einem Führungskäfig Rollkörper vorgesehen, die mit einer Lauffläche im Gehäuse zusammenwirken, auf der die Bahn der Rollkörper festgelegt ist und die unter einem bestimmten Drehwinkel angeordnete Rampen aufweist. Werden die gegen die Lauffläche vorgespannten Rollkörper gegen die Vorspannung über die Rampen von einem ersten Niveau auf ein zweites Niveau geführt, so bewirkt der hierfür erforderliche Kraftanstieg einen am Pedal spürbaren mechanischen Widerstand, der dem Schaltpunkt entspricht.

Die deutsche Offenlegungsschrift DE 43 31 902 A1 und das britische Patent GB 2 281 957 zeigen ebenfalls eine Pedalwertgeberanordnung mit der sogenannten Kick-Down-Auslösung.

Auch die deutsche Offenlegungsschrift DE 44 22 232 A1 zeigt eine Pedalwertgeberanordnung, bei der in einer Zwischenstellung ein abrupter Anstieg der Pedalkraft erfolgt und bei der an der Stelle mit dem Kraftanstieg über einen Schalter ein Schaltsignal erzeugt wird.

Die in den genannten Veröffentlichungen gezeigten Pedalwertgeberanordnungen haben den Nachteil, daß der Aufwand zum Herstellen dieser Pedalwertgeberanordnungen sehr hoch ist und der Aufwand zum Einstellen des Schaltpunkts ebenso ist der Aufwand der Zuordnung des Schalters zu der Betätigungsstellung mit dem Kraftanstieg hoch und trotzdem mit großen Toleranzen behaftet.

Die deutsche Offenlegungsschrift DE 195 36 699 A1 zeigt eine Pedalwertgeberanordnung mit einer Kick-Down-Mechanik und einem Schalter. Die Kick-Down-Mechanik und der Schalter befinden sich in einem Gehäuse, das sehr leicht an der das Pedal tragenden Haltestruktur angebracht werden kann. Wie Untersuchungen dieses Gehäuses, in dem sich die Kick-Down-Mechanik und der Schalter befinden, gezeigt haben, ist die Zuordnung des Schalters zu dem Kick-Down-Druckpunkt auch bei dieser Ausführung mit hohem Aufwand und erheblichen Schalttoleranzen verbunden.

Es wurden auch bereits Lösungen vorgeschlagen, bei denen in einem Gehäuse an einem Verstellkörper durch eine Druckfeder radial nach außen gespannte Kugeln vorgesehen sind. Zusätzlich ist an dem Verstellkörper ein mit einer Feder gegen zwei Kontaktbahnen gespannter Bügel angebracht. Je nach Stellung des Verstellkörpers kommt der Bügel an den Kontaktbahnen zur Anlage oder der Bügel ist von den Kontaktbahnen abgehoben. Allerdings hat diese vorgeschlagene Lösung den Nachteil, daß der Aufwand beim Herstellen ziemlich hoch ist, weil relativ viele aufwendige Bauteile benötigt werden und insbesondere weil der Bügel in einer an dem Verstellkörper vorgesehenen Führung geführt werden muß. Die Führung des Bügels hat den gravierenden Nachteil, daß, damit ein Klemmen zwischen dem Bügel und der Führung vermieden wird, zwangsweise immer ein Spiel zwischen dem Bügel und der Führung vorhanden sein muß. Dieses Spiel bedeutet sehr unerwünschte Toleranzen bei der Einstellung des elektrischen Schaltpunkts, die von vielen Kunden nicht akzeptiert werden.

Eine Pedalwertgeberanordnung mit den Merkmalen des Oberbegriffs der unabhängigen Ansprüche 1 und 8 ist bekannt aus EP-A-739 771.

### Vorteile der Erfindung

Die erfindungsgemäße Pedalwertgeberanordnung mit den Merkmalen des Anspruchs 1 bzw. mit den Merkmalen des Anspruchs 8 hat demgegenüber den Vorteil, daß der Aufwand der bei der Herstellung der Kraftänderungseinrichtung, insbesondere die Zuordnung des Schaltpunkts zu dem Kraftanstieg in der Zwischenstellung, ziemlich gering ist und eine sehr präzise Zuordnung des elektrischen Schaltpunkts zu dem Kraftanstieg erreichbar ist. Die Zuordnung ist, weil sehr verschleißunempfindlich, über sehr lange Zeit konstant. Weil zwischen der mindestens einen Blattfeder und dem Lagermittel bzw. zwischen der mindestens einen Blattfeder und dem Betätigungsglied keine Reibung, insbesondere keine Reibung in einer Führung vorhanden ist, ist auch kein zu einer Schaltungenauigkeit führender Reibverschleiß vorhanden. Ein besonderer Vorteil ist, daß die Blattfeder nicht insgesamt bewegt werden muß, sondern daß die Blattfeder mit einem Ende fest eingespannt werden kann und dadurch der elektrische Schaltpunkt präzise festlegbar ist.

Durch die in den Unteransprüchen aufgeführten Maßnahmen sind vorteilhafte Weiterbildungen und Verbesserungen der in den Hauptansprüchen angegebenen Pedalwertgeberanordnung möglich.

Wird die Stromschleife über insgesamt zwei Blattfedern geführt, so läßt sich die Stromschleife vorteilhafterweise besonders einfach herstellen.

Ist die Stromschleife so ausgeführt, daß nur eine der beiden Blattfedern von der Kontaktfläche abhebt, so hat dies den Vorteil, daß nur diese eine Blattfeder in ihrer Baulänge und in ihrem Einstellungsort genau dimensioniert werden muß. Gewisse Toleranzen bei der anderen Blattfeder haben also keinen Einfluß auf den elektrischen Schaltpunkt.

Ist am Ende der Kontaktfläche, dort wo die mindestens eine Blattfeder eine Endkante der Kontaktfläche überfährt, ein Überstand vorgesehen, der in Richtung der Blattfeder weiter vorsteht, so daß der der Endkante zugewandte Endbereich der Blattfeder nicht direkt mit der Endkante der Kontaktfläche in Berührung kommt, so hat dies den Vorteil, daß, weil das Betätigungsglied vorzugsweise aus einem relativ weichen Kunststoff besteht, die Blattfeder auch bei sehr häufigem Schalten geschützt ist, was die Dauerhaltbarkeit der Pedalwertgeberanordnung insgesamt günstig beeinflußt.

Mit der Abhebevorrichtung wird auf vorteilhafte Weise erreicht, daß die mindestens eine Blattfeder materialschonend von der Kontaktfläche abgehoben wird bzw. materialschonend auf der Kontaktfläche aufgesetzt wird. Ein weiterer Vorteil ist, daß an dem der Kontaktfläche zugewandten Endbereich der Blattfeder nur dann eine Reibung angreift, wenn die Stromschleife geschlossen sein soll. Ist die Stromschleife geöffnet, dann erfolgt keine Reibung an der Blattfeder, was die Abnutzung der Blattfeder wesentlich verringert und dadurch die Dauerhaltbarkeit der Pedalwertgeberanordnung wesentlich verlängert wird.

Werden die Blattfedern und die jeweils zugeordneten Anschlüsse aus einem einzigen Materialstück, insbesondere aus einem dünnen Blechstreifen, gefertigt, so hat dies den Vorteil, daß insgesamt besonders wenig Bauteile benötigt werden.

Auch bei der Ausführung, bei der an dem Lagermittel die Kontaktflächen vorgesehen sind, erhält man den Vorteil, daß besonders wenig und trotzdem einfach herstellbare Bauteile benötigt werden, wenn der elektrische Anschluß und die dem Anschluß zugeordnete Kontaktfläche einstückig aus einem Bauteil, vorzugsweise aus einem einfachen Blechstreifen, gefertigt werden, insbesondere herausgestanzt werden.

Sind an dem Betätigungsglied die Betätigungsgliedhaltefläche und an dem Lagermittel die Lagermittelhaltefläche vorgesehen, so kann durch einfaches Einfügen eines Halteelements zwischen die Lagermittelhaltefläche und die Betätigungsgliedhaltefläche die Kraftänderungseinrichtung sehr einfach sowie aus wenigen und leicht herstellbaren Bauteilen zusammengefügt werden.

Ist das Halteelement klammerartig ausgeführt, so läßt sich die Kraftänderungseinrichtung sehr einfach zusammenbauen und man bekommt zwischen dem Lagermittel und dem Betätigungsglied eine gleichmäßige und symmetrische Kraftverteilung.

Ist in dem Betätigungsglied ein Querloch vorgesehen, in dem sich eine Spreizfeder und mindestens ein Rollkörper, insbesondere eine Kugel, befinden, wobei der Rollkörper von der Spreizfeder gegen das Halteelement gedrückt wird, so bietet dies den Vorteil, daß das Halteelement eine Stufe bilden kann, so daß bei einer Verstellung des Betätigungsglieds der Rollkörper über die Stufe gedrückt wird, so daß man dadurch sehr leicht einen gewünschten, präzise festlegbaren Kraftsprung erhält.

### Zeichnung

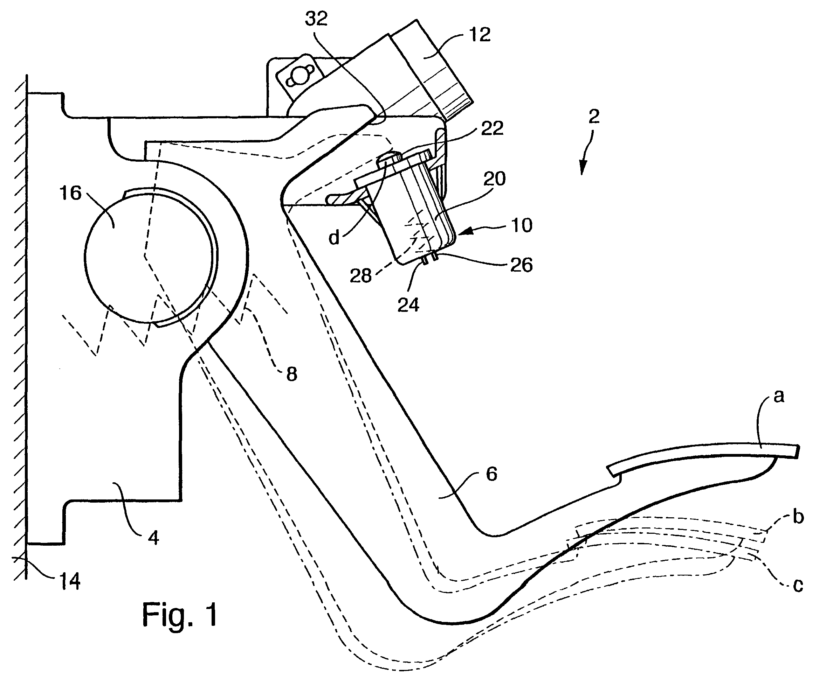

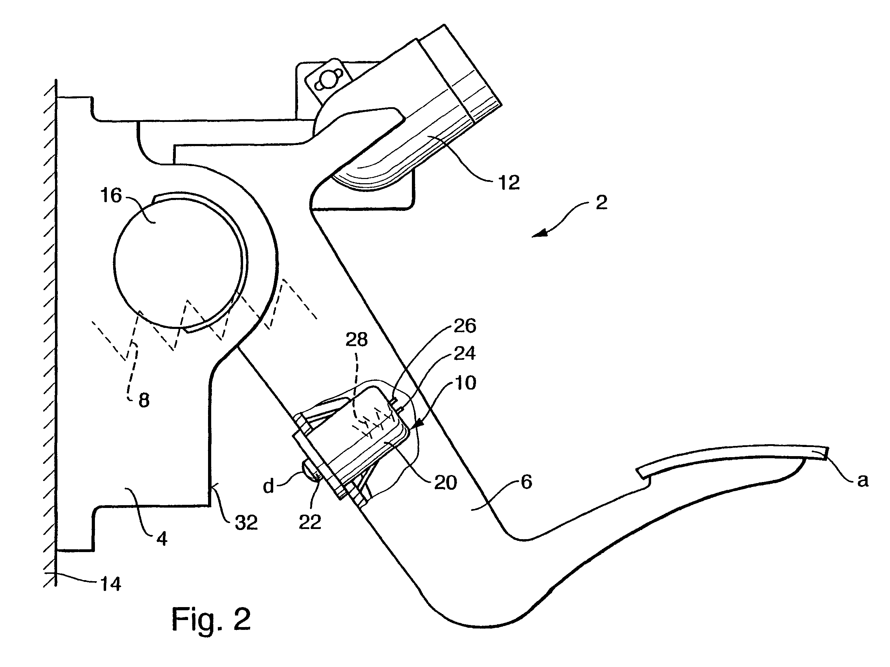

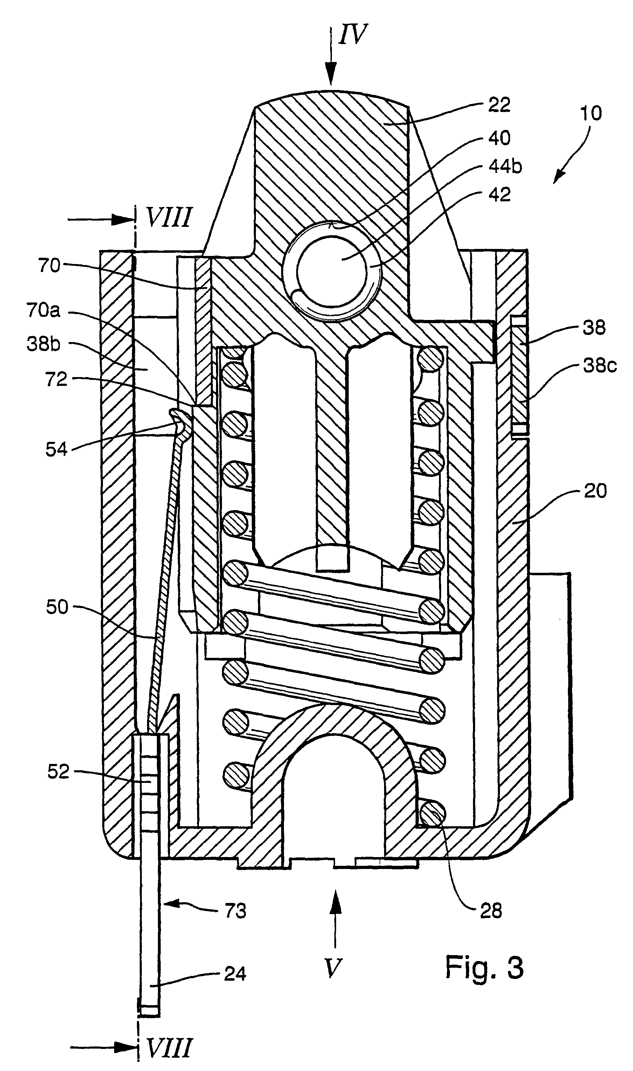

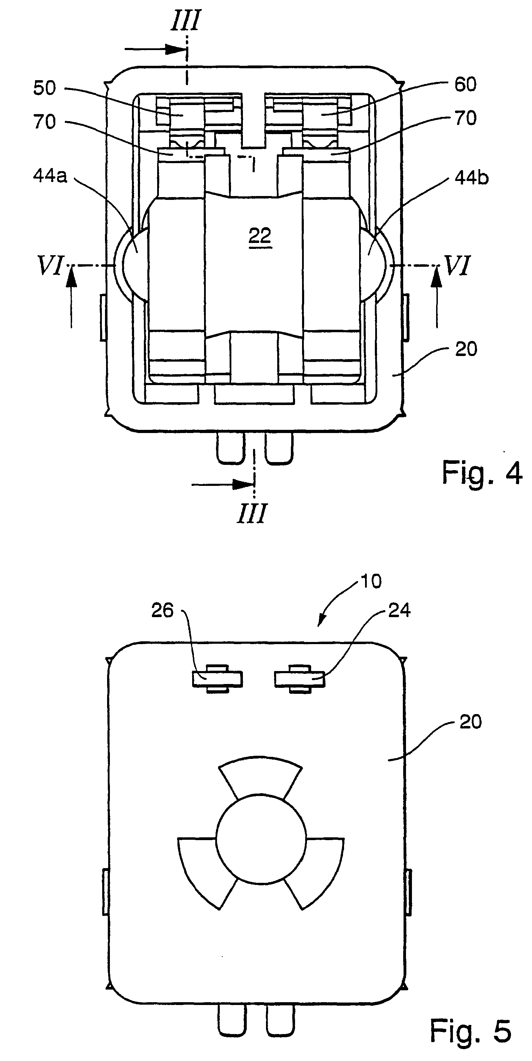

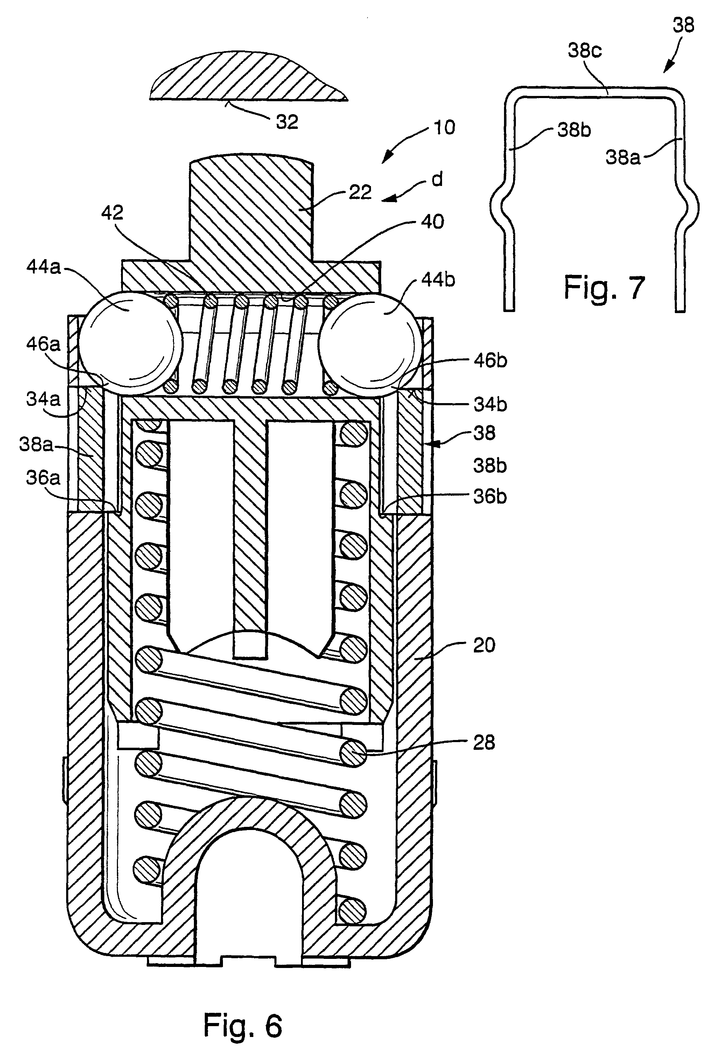

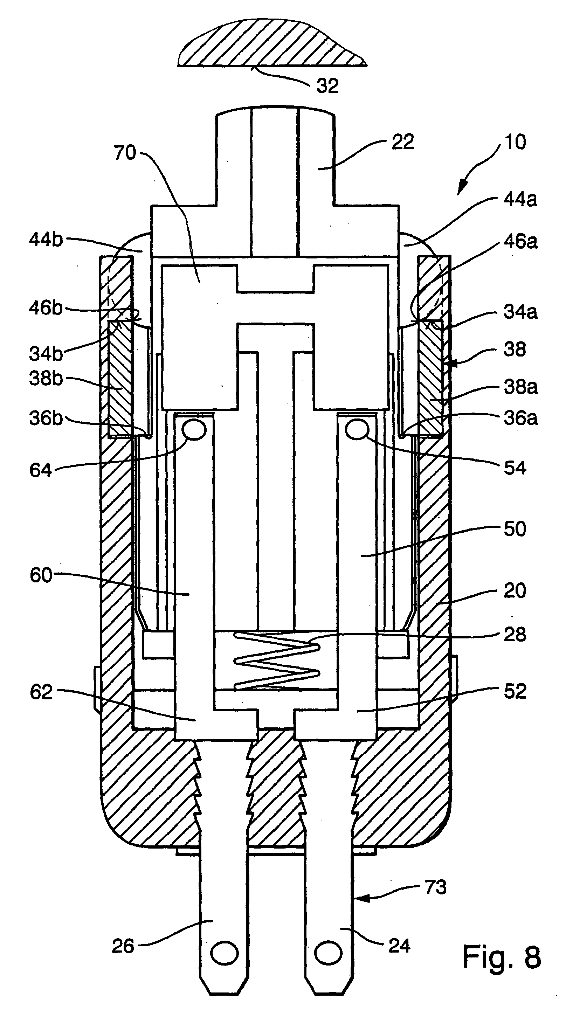

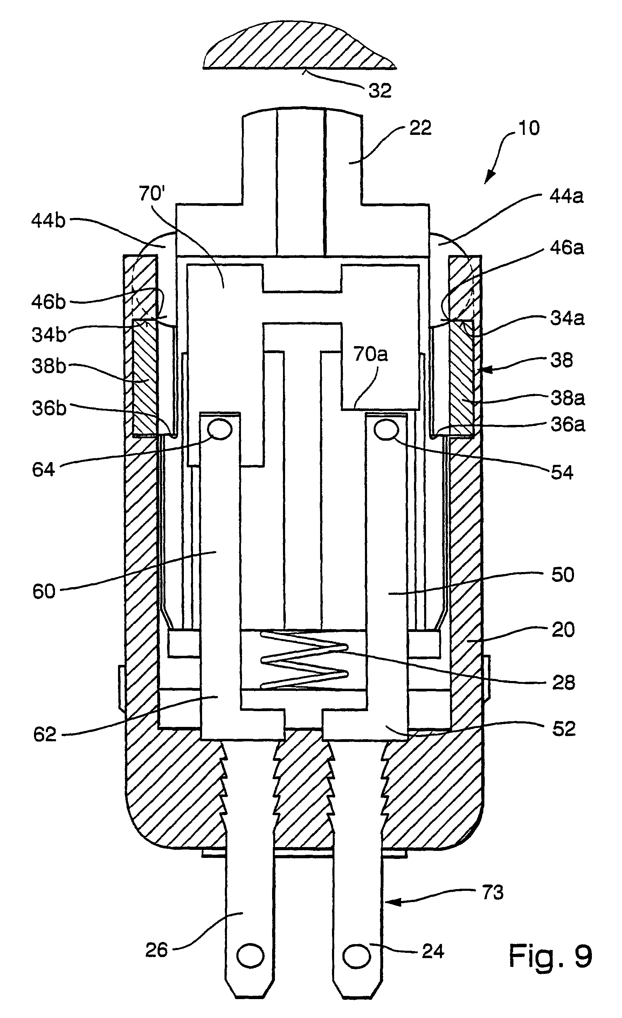

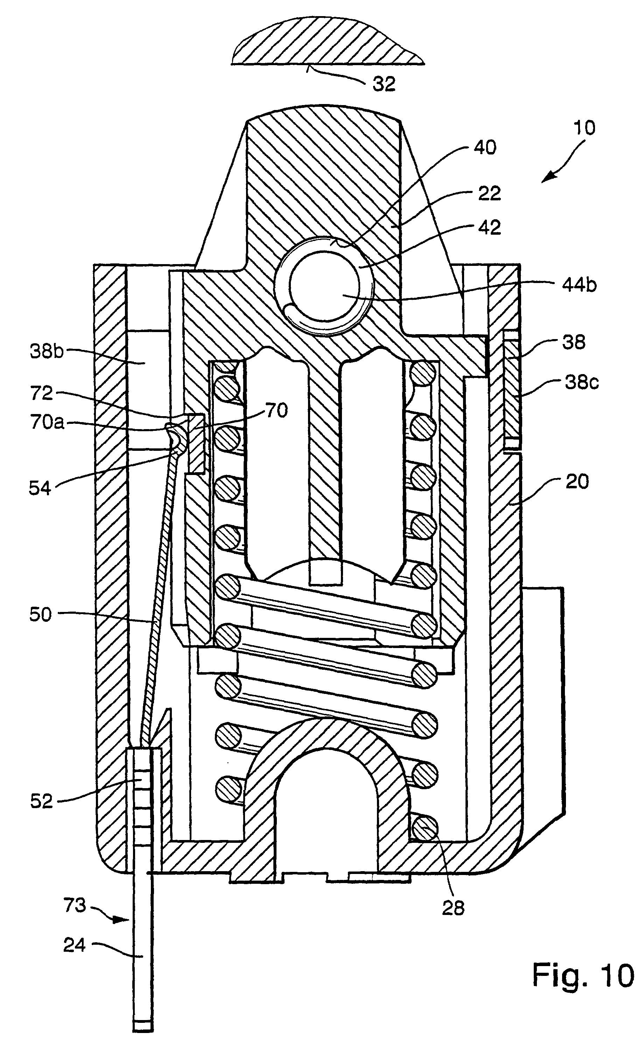

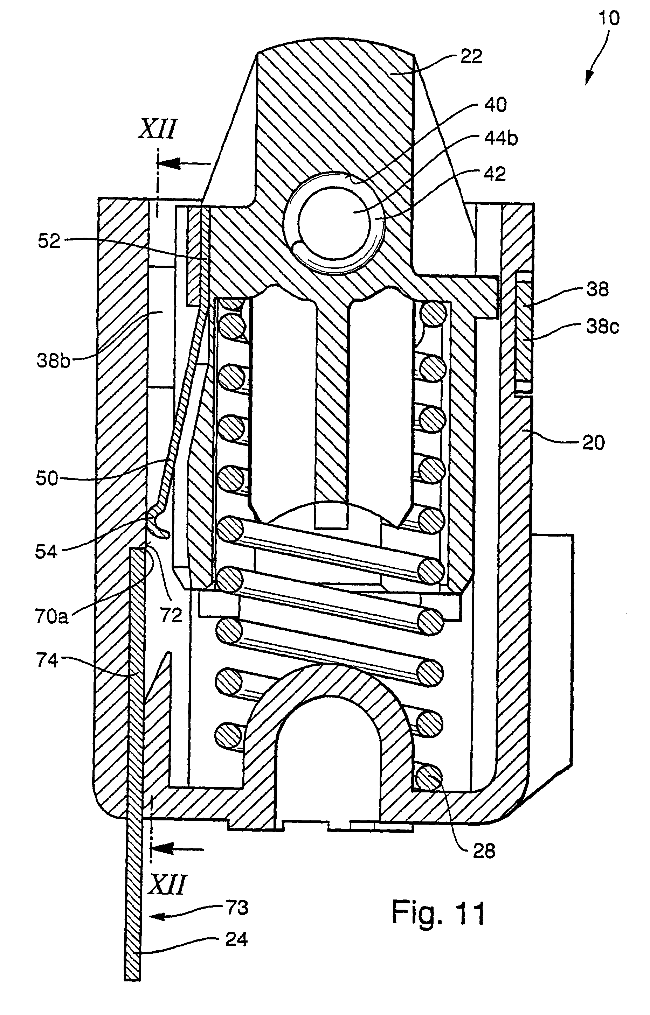

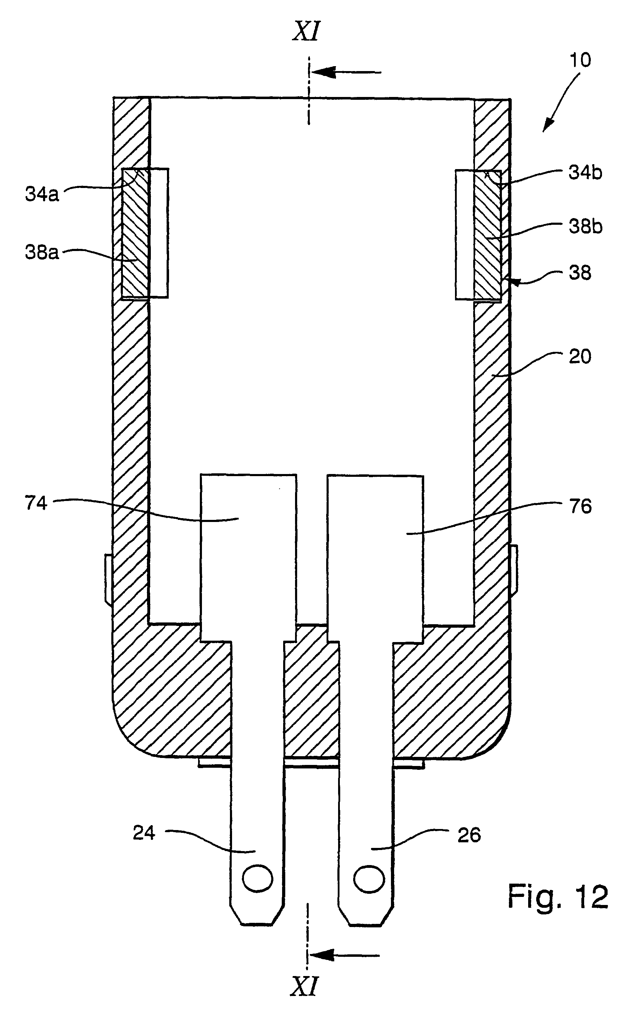

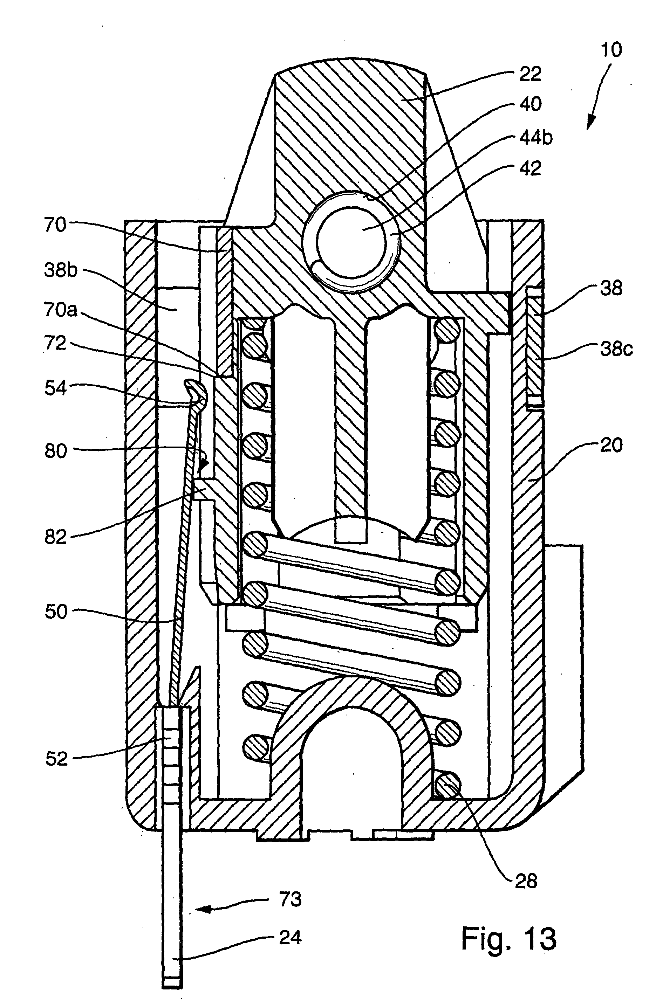

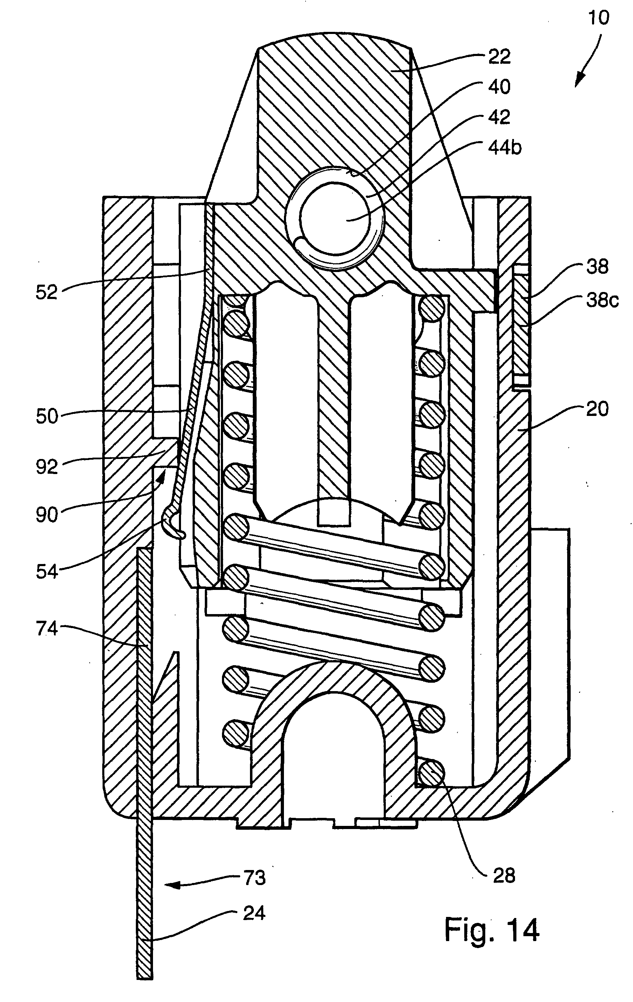

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figur 1 eine Seitenansicht eines ersten Ausführungsbeispiels der Pedalwertgeberanordnung, die Figur 2 eine Seitenansicht eines zweiten Ausführungsbeispiels der Pedalwertgeberanordnung, die Figur 3 einen Längsschnitt durch die Kraftänderungseinrichtung der Pedalwertgeberanordnung, die Figur 4 eine stirnseitige Ansicht der Kraftänderungseinrichtung, die Figur 5 eine Ansicht einer anderen Stirnseite der Kraftänderungseinrichtung, die Figur 6 einen anderen Längsschnitt durch die Kraftänderungseinrichtung, die Figur 7 ein Halteelement der Kraftänderungseinrichtung, die Figur 8 einen anderen Längsschnitt durch die Kraftänderungseinrichtung, die Figur 9 einen Längsschnitt durch ein abgewandeltes Ausführungsbeispiel der Kraftänderungseinrichtung, die Figur 10 einen Längsschnitt durch ein weiteres abgewandeltes Ausführungsbeispiel der Kraftänderungseinrichtung, die Figur 11 einen Längsschnitt durch ein weiteres Ausführungsbeispiel der Kraftänderungseinrichtung, die Figur 12 einen anderen Längsschnitt durch das weitere Ausführungsbeispiel von Figur 11, die Figur 13 einen Längsschnitt eines abgeänderten Ausführungsbeispiels der Kraftänderungseinrichtung und die Figur 14 einen Längsschnitt eines weiteren Ausführungsbeispiels der Kraftänderungseinrichtung.

Beschreibung der Ausführungsbeispiele

Die erfindungsgemäß ausgeführte Pedalwertgeberanordnung kann zur Steuerung verschiedener Antriebsmaschinen verwendet werden. Die Antriebsmaschine ist beispielsweise ein Ottomotor, dessen Drosselklappe mit einem Stellmotor verstellt wird. In diesem Fall dient die Pedalwertgeberanordnung beispielsweise zur Erzeugung von elektrischen Signalen, die dem die Drosselklappe verstellenden Stellmotor zugeführt werden. Es ist aber auch möglich, daß die Verstellung der Drosselklappe mechanisch geschieht, dadurch daß beispielsweise ein die Pedalwertgeberanordnung mit der Drosselklappenwelle verbindender Bowdenzug oder Seilzug vorgesehen wird. Die Antriebsmaschine kann auch beispielsweise ein Dieselmotor oder ein Elektromotor sein, wobei auch in diesen Fällen von der Pedalwertgeberanordnung elektrische oder mechanische Signale ausgehen, die, entsprechend umgeformt, die Leistung der Antriebsmaschine steuern.

Die Pedalwertgeberanordnung ist vorzugsweise direkt im Aktionsbereich des Kraftfahrzeugführers eines Kraftfahrzeugs angeordnet. Das Pedal der Pedalwertgeberanordnung ist vorzugsweise das unmittelbar vom Fahrerfuß betätigte Pedal. Bei besonderem Bedarf ist es aber auch problemlos möglich, mit einfachen mechanischen Mitteln am Pedal der Pedalwertgeberanordnung ein separates Gaspedal oder einen sonstigen Bedienhebel anzulenken.

Bei der Pedalwertgeberanordnung ist vorgesehen, daß in einer bestimmten Zwischenstellung des Pedals eine sogenannte Kick-Down-Auslösung auftritt. Bei der Kick-Down-Auslösung soll beispielsweise zum Schalten eines automatischen Getriebes ein elektrisches Schaltsignal ausgelöst werden und gleichzeitig soll der das Pedal bedienende Fahrer beim Überschreiten der Zwischenstellung einen deutlichen Kraftanstieg und in der Zwischenstellung zusätzlich eine kurze Kraftüberhöhung verspüren. Der Kraftanstieg und die Kraftüberhöhung soll exakt zusammen mit der Auslösung des elektrischen Schaltsignals auftreten.

Die **Figur 1** zeigt eine Seitenansicht eines ersten, besonders vorteilhaften, bevorzugt ausgewählten Ausführungsbeispiels.

Die Figur 1 zeigt eine Pedalwertgeberanordnung 2. Die Pedalwertgeberanordnung 2 umfaßt eine Haltestruktur 4, ein Pedal 6, eine Rückstellfederanordnung 8, eine Kraftänderungseinrichtung 10 und einen Sensor 12. Die Pedalwertgeberanordnung 2 ist über die Haltestruktur 4 an einem Chassis 14 eines Kraftfahrzeugs befestigt. Das Pedal 6 ist über die Haltestruktur 4 und über eine an der Haltestruktur 4 vorgesehene Schwenklagerung 16 an dem Chassis 14 schwenkbar gelagert. Die Rückstellfederanordnung 8 befindet sich innerhalb der Haltestruktur 4 und innerhalb des Pedals 6.. Deshalb ist die Rückstellfederanordnung 8 von außen nicht sichtbar und deshalb gestrichelt dargestellt.

Bei Nichtbetätigung des Pedals 6 sorgt die Rückstellfederanordnung 8 dafür, daß das Pedal 6 in einer nicht betätigten Endstellung steht, die nachfolgend als Ruhestellung a bezeichnet wird. Ausgehend von der Ruhestellung a kann das Pedal 6 durch Druck auf das Pedal 6 in eine Endstellung c verstellt werden. Zwischen der Ruhestellung a und der Endstellung c gibt es eine dazwischen liegende Stellung, die nachfolgend als Zwischenstellung b bezeichnet wird.

Die Zeichnungen zeigen die Pedalwertgeberanordnung 2 bzw. die Kraftänderungseinrichtung 10, während das Pedal 6 in seiner Ruhestellung a steht. Zusätzlich ist in der Figur 1 ein Teil des Pedals 6 mit gestrichelten Linien in der Zwischenstellung b und zusätzlich auch noch mit strichpunktierten Linien in der Endstellung c andeutungsweise dargestellt.

Die Kraftänderungseinrichtung 10 ist über die Haltestruktur 4 an dem Chassis 14 befestigt. Die Kraftänderungseinrichtung 10 umfaßt ein Lagermittel 20, ein Betätigungsglied 22, einen ersten elektrischen Anschluß 24 und einen zweiten elektrischen Anschluß 26. An den elektrischen Anschlüssen 24, 26 ist beispielsweise eine zu einer Steuerelektronik führende zweiadrige elektrische Leitung angeschlossen. Diese elektrische Leitung und die Steuerelektronik sind der besseren Übersichtlichkeit wegen in den Zeichnungen nicht dargestellt.

Das Betätigungsglied 22 ist in dem Lagermittel 20 verschiebbar gelagert. Innerhalb der Kraftänderungseinrichtung 10 ist eine Spannfeder 28 vorgesehen. Die Kraft der Spannfeder 28 spannt das Betätigungsglied 22 in eine Endstellung, die nachfolgend als Anschlagstellung d bezeichnet wird. In den Zeichnungen ist das Betätigungsglied 22 dargestellt, während es sich in seiner Anschlagstellung d befindet.

Wird das Pedal 6 zwischen der Ruhestellung a und der Zwischenstellung b verstellt, dann befindet sich das Betätigungsglied 22 unbetätigt in der dargestellten Anschlagstellung d.

Wird das Pedal 6 über die Zwischenstellung b hinaus in Richtung der Endstellung c betätigt, dann drückt ein an dem Pedal 6 vorgesehener Anschlag 32 auf das Betätigungsglied 22, und der Anschlag 32 verstellt das Betätigungsglied 22 gegen die Kraft der Spannfeder 28 weg von der Anschlagstellung d.

Die **Figur 2** zeigt eine Seitenansicht eines zweiten, bevorzugt ausgewählten, besonders vorteilhaft ausgeführten Beispiel.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Im Unterschied zu dem in der Figur 1 dargestellten Ausführungsbeispiel ist bei dem in der Figur 2 gezeigten Ausführungsbeispiel das Lagermittel 20 der Kraftänderungseinrichtung 10 am Pedal 6 befestigt, und der Anschlag 32 ist an der Haltestruktur 4 bzw. an dem Chassis 14 vorgesehen.

Auch bei diesem Ausführungsbeispiel drückt der Anschlag 32 das Betätigungsglied 22 weg von der Anschlagstellung d gegen die Kraft der Spannfeder 28, wenn das Pedal 6 im Bereich zwischen der Zwischenstellung b und der Endstellung c verstellt wird.

Die Figuren 3 bis 14 zeigen beispielhaft unterschiedliche Ausführungsformen der Kraftänderungseinrichtung 10 und verschiedene Einzelheiten der Kraftänderungseinrichtung 10.

Die Figuren 3 bis 8 zeigen beispielhaft eine erste Ausführungsform der Kraftänderungseinrichtung 10.

Die **Figur 3** zeigt einen Längsschnitt durch die Kraftänderungseinrichtung 10. Die in der Figur 3 dargestellte Schnittebene ist in der Figur 4 mit III - III markiert. Die **Figur 4** zeigt eine stirnseitige Ansicht der Kraftänderungseinrichtung 10. Die Blickrichtung für die in der Figur 4 dargestellte Ansicht ist in der Figur 3 mit IV markiert. Die **Figur 5** zeigt eine andere Stirnseite der Kraftänderungseinrichtung 10. Die Blickrichtung für die in der Figur 5 dargestellte Ansicht ist in der Figur 3 mit V markiert. Die **Figur 6** zeigt einen anderen Längsschnitt durch die Kraftänderungseinrichtung 10. Die in der Figur 6 dargestellte Schnittebene ist in der Figur 4 mit VI - VI markiert.

In allen Figuren befindet sich das Betätigungsglied 22 in der sogenannten Anschlagstellung d.

Wie insbesondere die Figuren 3 und 6 zeigen, ist das Betätigungsglied 22 innerhalb des Lagermittels 20 in Längsrichtung verschiebbar gelagert. Die Spannfeder 22 spannt das Betätigungsglied 22 in die Anschlagstellung d. Die Anschlagstellung d wird auf folgende Weise sehr leicht erreicht: An dem Lagermittel 20 gibt es eine Lagermittelhaltefläche 34a und eine Lagermittelhaltefläche 34b (Figur 6). An dem Betätigungsglied 22 gibt es eine Betätigungsgliedhaltefläche 36a und eine Betätigungsgliedhaltefläche 36b (Figur 6). Zwischen den Lagermittelhalteflächen 34a, 34b und den Betätigungsgliedhalteflächen 36a, 36b befindet sich ein Halteelement 38.

Wie die **Figur 7** zeigt, ist das Halteelement 38 klammerartig geformt. Das Halteelement 38 hat einen ersten Schenkel 38a, einen zweiten Schenkel 38b und einen Verbindungsbügel 38c. In fertig montiertem Zustand befindet sich der erste Schenkel 38a des Halteelements 38 zwischen der Lagermittelhaltefläche 34a und der Betätigungsgliedhaltefläche 36a, und der zweite Schenkel 38b des Halteelements 38 befindet sich zwischen der Lagermittelhaltefläche 34b und der Betätigungsgliedhaltefläche 36b. Wie die Figur 7 zeigt, sind die Schenkel 38a und 38b des Halteelements 38 wellenförmig gestaltet, so daß eine gewisse radiale Federwirkung erzielt wird und damit sichergestellt ist, daß die Schenkel 38a und 38b mit den Lagermittelhalteflächen 34a, 34b und den Betätigungsgliedhalteflächen 36a, 36b in ausreichend bemessenen Kontakt gelangen. Bevor das Halteelement 38 in die Kraftänderungseinrichtung 10 hineingeschoben wird, kann das Betätigungsglied 22 sehr leicht in das Lagermittel 20 eingebaut werden. Durch etwas axialen Druck auf das Betätigungsglied 22 gegen die Kraft der Spannfeder 28 wird das Betätigungsglied 22 so weit in das Lagermittel 20 hineingedrückt, daß das Halteelement 38 sehr leicht von der Seite her in die Kraftänderungseinrichtung 10, d.h. zwischen die Lagermittelhalterflächen 34a, 34b und die Betätigungsgliedhalteflächen 36a, 36b hineingeschoben werden kann. Nach dem Hineinschieben des Halteelements 38 zwischen die Halteflächen 34a, 34b, 36a, 36b hält das Halteelement 38 das Betätigungsglied 22 in der Anschlagstellung d. Wird jedoch auf das Betätigungsglied 22 eine ausreichend große Kraft ausgeübt, dann wird das Betätigungsglied 22 weg von der Anschlagstellung d verstellt. Das Betätigungsglied 22 wird axial in den im Lagermittel 20 vorhandenen Raum hinein gedrückt. Dabei heben die Betätigungsgliedhalteflächen 36a, 36b von dem Halteelement 38 ab.

Quer zur Betätigungsrichtung des Betätigungsglieds 22 verläuft durch das Betätigungsglied 22 ein Querloch 40. In dem Querloch 40 gibt es eine Spreizfeder 42. Die Spreizfeder 42 ist beispielsweise eine schraubenförmig gewundene Druckfeder, kann aber auch beispielsweise eine U-förmig gebogenen Blattfeder sein. An den Enden des Querlochs 40 sind ein erster Rollkörper 44a und ein zweiter Rollkörper 44b angeordnet. Die Rollkörper 44a, 44b sind vorzugsweise Kugeln, können aber auch beispielsweise zylindrische Rollen sein. Die Rollkörper 44a, 44b ragen seitlich über das Querloch 40 hinaus. Es ist auch möglich, das Querloch 40 als Sackloch auszubilden und nur am offenen Ende des Querlochs einen Rollkörper vorzusehen, so daß insgesamt nur ein einziger Rollkörper benötigt wird.

Die Spreizfeder 42 spannt die beiden Rollkörper 44a, 44b quer zur Betätigungsrichtung des Betätigungsglieds 22 radial nach außen. An dem Schenkel 38a des Halteelements 38 gibt es eine Kante, die eine Stufe 46a bildet, die bei einer Verstellung des Betätigungsglieds 22 weg von der Anschlagstellung d von dem Rollkörper 44a überwunden werden muß. Und an dem Schenkel 38b des Halteelements 38 gibt es ebenfalls eine Kante, die eine Stufe 46b bildet, die bei einer Verstellung des Betätigungsglieds 22 weg von der Anschlagstellung d von dem Rollkörper 44b überwunden werden muß. Wird das Betätigungsglied 22 weg von der Anschlagstellung d verstellt, dann müssen die Rollkörper 44a, 44b über die Stufen 46a, 46b gegen die Kraft der Spreizfeder 42 hinweggedrückt werden. Dadurch entsteht bei einer Verschiebung des Betätigungsglieds 22 weg von der Anschlagstellung d zusätzlich zu der Kraft der Spannfeder 28 eine Zusatzkraft, die relativ hoch ist, aber nur ein kurzes Stück während der Betätigung des Betätigungsglieds 22 auftritt. Dies hat zur Folge, daß, wenn das Pedal 6 über die Zwischenstellung b hinaus in Richtung der Endstellung c verstellt wird, die Kraft zur Betätigung des Pedals 6 unmittelbar hinter der Zwischenstellung b zunächst steil ansteigt, wegen der zusätzlich Kraft der Spannfeder 28 und weil die Rollkörper 44a, 44b gegen die Kraft der Spreizfeder 42 über die Stufen 46a, 46b hinweggedrückt werden müssen. Dies führt dazu, daß der das Pedal 6 bedienende Fahrer einen erwünschten, deutlich spürbaren Druckpunkt merken kann. Dieser Druckpunkt kann als Kick-Down-Druckpunkt bezeichnet werden, der durch die Kraftänderungseinrichtung 10 hervorgerufen wird. Sobald die Rollkörper 44a, 44b über die Stufen 46a, 46b hinweggedrückt sind, gleiten die Rollkörper 44a, 44b entlang der Schenkel 38a, 38b des Halteelements 38, so daß nach dem Überwinden der Stufen 46a, 46b die Kraftänderungseinrichtung 10 nur noch mit der Kraft der Spannfeder 28 und mit der Reibung zwischen den Rollkörpern 44a, 44b und dem Halteelement 38 wirksam ist. Zwischen der Zwischenstellung b und der Endstellung c wirkt die Kraftänderungseinrichtung 10 zusätzlich zu der Kraft der Rückstellfederanordnung 8.

Das Betätigungsglied 22 und das Lagermittel 20 bestehen aus einem leicht formbaren Kunststoff, so daß der Aufwand zum Herstellen dieser Bauteile sehr gering ist. Die Rollkörper 44a, 44b und das Halteelement 38 bestehen aus einem relativ harten Werkstoff, so daß, ohne daß im Laufe der Zeit mit einer Veränderung gerechnet werden muß, die eingestellte Kraft über die gesamte Benutzungsgdauer der Kraftänderungseinrichtung 10 gewährleistet bleibt.

Die elektrischen Anschlüsse 24 und 26 der Kraftänderungseinrichtung 10 sind in das Lagermittel 20 fest eingegossen, wobei von den Anschlüssen 24, 26 die beiden Enden aus dem Lagermittel 20 herausragen. Diese Enden sind so geformt, daß sie als Steckstifte verwendet werden können, zum elektrischen Ankuppeln einer nicht dargestellten elektrischen Verbindung zu einem nicht dargestellten Steuergerät. Das nach innen weisende Ende des elektrischen Anschlusses 24 hat die Form einer Blattfeder 50. Die Blattfeder 50 hat einen zu dem Anschluß 24 führenden ersten Endbereich 52, der zusammen mit dem elektrischen Anschluß 24 fest mit dem Lagermittel 20 verbunden ist. Die feste Verbindung geschieht zweckmäßigerweise durch Eingießen des Endbereichs 52 der Blattfeder 50 in den Kunststoff des Lagermittels 20. Die Blattfeder 50 und der aus dem Lagermittel 20 herausragende elektrische Anschluß 24 sind vorzugsweise zusammenhängend aus einem dünnen Stück Blech herausgestanzt worden. Zur Erhöhung der Stabilität des aus dem Lagermittel 20 hervorstehenden Anschlusses 24 ist dieser Teil des Blechstücks am herausstehenden Ende umgebogen, so daß der herausstehende Anschluß 24 die doppelte Dicke des Blechstücks hat, wodurch die Stabilität deutlich erhöht werden kann. Innerhalb des Lagermittels 20 genügt die einfache Wandstärke des dünnen Blechstücks. Die Blattfeder 50 hat einen etwas radial nach innen gegen das Betätigungsglied 20 abgebogenen zweiten Endbereich 54. Die Einbaubedingungen für die Blattfeder 50 sind so, daß die Blattfeder 50 etwas elastisch durchgebogen ist, so daß der Endbereich 54 mit elastischer Vorspannung gegen das Betätigungsglied 22 gespannt wird.

Die **Figur 8** zeigt einen Blick auf eine in der Figur 3 mit VIII - VIII markierte Schnittfläche.

Parallel neben der Blattfeder 50 gibt es eine zweite Blattfeder 60. Die zweite Blattfeder 60 ist gleich gestaltet wie die erste Blattfeder 50. Die zweite Blattfeder 60 hat einen ersten gehäusefesten Endbereich 62, der mit dem zweiten elektrischen Anschluß 26 verbunden ist, und einen zweiten, elastisch gegen die Oberfläche des Betätigungsglieds 22 gespannten Endbereich 64. Die Blattfeder ist 60 einstückig an den zweiten elektrischen Anschluß 26 angeformt.

An der den Blattfedern 50, 60 zugewandten Oberfläche des Betätigungsglieds 22 ist an dem Betätigungsglied 22 eine elektrisch gut leitende Kontaktfläche 70 angebracht. Die Kontaktfläche 70 ist mit dem Betätigungsglied 22 fest verbunden. Die Kontaktfläche 70 ist so lang dimensioniert, daß, wenn das Betätigungsglied 22 in der nicht betätigten Anschlagstellung d steht, der Endbereich 54 der Blattfeder 50 und der Endbereich 64 der Blattfeder 60 außerhalb der Kontaktfläche 70 am Betätigungsglied 22 anliegen. Die Kontaktfläche 70 hat eine Endkante 70a, die bei Betätigung des Betätigungsglieds 22 von den Endbereichen 54, 64 der Blattfedern 50, 60 überschritten wird. Die Kontaktfläche 70 ist etwas in die Oberfläche des Betätigungsglieds 22 hinein versenkt und die Dicke der Kontaktfläche 70 ist so dimensioniert, daß an der Endkante 70a zum Betätigungsglied 22 hin ein Überstand 72 entsteht. Der Überstand 72 ragt in Richtung der Blattfeder 50 über die Oberfläche der Kontaktfläche 70 hinaus. Damit wird erreicht, daß bei einer Betätigung des Betätigungsglieds 22 die Endbereiche der Blattfedern 50, 60 nicht an die relativ harte Endkante 70a der Kontaktfläche 70 stoßen, sondern nur an den Überstand 72, der aus dem gleichen relativ weichen Material besteht, vorzugsweise Kunststoff, wie das Betätigungsglied 22. Dadurch erreicht man eine deutliche Schonung der Endbereiche 54, 64 der Blattfedern 50 und 60.

Wenn das Betätigungsglied 22 in seiner unbetätigten Anschlagstellung d steht, wie in den Figuren 3, 6 und 8 dargestellt, dann besteht über die Kraftänderungseinrichtung 10 keine elektrische Verbindung zwischen dem elektrischen Anschluß 24 und dem elektrischen Anschluß 26. Erst wenn das Betätigungsglied 22 gegen die Kraft der Spannfeder 28 so weit verstellt wurde, daß die Endbereiche 54 und 64 die Kontaktfläche 70 kontaktieren, dann wird eine dadurch gebildete elektrische Stromschleife 73 (Fig. 8) geschlossen. Die elektrische Stromschleife 73 verbindet die beiden Anschlüsse 24 und 26 miteinander über die Blattfedern 50, 60 und über die Kontaktfläche 70. Wenn das Betätigungsglied 22 so steht, daß die Blattfedern 50 und 60 die Kontaktfläche 70 nicht elektrisch kontaktiern, dann ist die Stromschleife 73 geöffnet, und das Betätigungsglied 22 befindet sich innerhalb eines Bereiches, der nachfolgend als Offen-Stellbereich des Betätigungsglieds 22 bezeichnet wird. Prinzipiell genügt es für den Offen-Stellbereich wenn auch nur eine der beiden Blattfedern 50, 60 von der Kontaktfläche abgehoben hat. Befindet sich das Betätigungsglied 22 in einem Bereich, bei dem beide Blattfedern 50 und 60 die Kontaktfläche 70 elektrisch kontaktieren, dann befindet sich das Betätigungsglied 22 in einem Bereich, in dem die elektrische Stromschleife 73 geschlossen ist. Dieser Bereich wird nachfolgend als Schließ-Stellbereich des Betätigungsglieds 22 bezeichnet.

Die **Figur 9** zeigt ebenfalls einen Blick auf die in der Figur 3 mit VIII - VIII markierte Schnittfläche. Im Vergleich zur Figur 8 sind in der Figur 9 einige nachfolgend erläuterte, beispielhafte Abwandlungen erkennbar.

Bei der in der Figur 8 gezeigten Ausführung ist die Kontaktfläche 70 so gestaltetet, daß beide Blattfedern 50, 60, bei Verstellung des Betätigungsglieds 22 von dem Offen-Stellbereich in den Schließ-Stellbereich so gut wie gleichzeitig in elektrischen Kontakt mit der Kontaktfläche 70 gelangen.

Bei der in der Figur 9 dargestellten, abgewandelten Ausführung ist die Kontaktfläche 70 (Fig. 8) durch eine Kontaktfläche 70' (Fig. 9) ersetzt worden. Die Kontaktfläche 70' hat eine ungefähr L-förmig ausgestanzte Oberfläche. Die Kontaktfläche 70' ist so geformt, daß die Blattfeder 60 in jeder Stellung des Betätigungsglieds 22 ständig die Kontaktfläche 70' kontaktiert. Nur die Blattfeder 50 gelangt bei Verstellung des Betätigungsglieds 22 von der Schließ-Stellung in die Offen-Stellung außerhalb des elektrischen Kontakts mit der Kontaktfläche 70'. In dem Offen-Stellbereich ist der elektrische Kontakt nur zwischen der Blattfeder 50 und der Kontaktfläche 70' unterbrochen. Dies hat den Vorteil, daß nur die eine Blattfeder 50 genau dimensioniert sein muß. Die Länge der anderen Blattfeder 60 spielt innerhalb weiter Toleranzen keine Rolle. Dadurch wird der Aufwand zum Herstellen der Kraftänderungseinrichtung 10 wesentlich verringert.

Die **Figur 10** zeigt ein weiteres, besonders vorteilhaftes, bevorzugt ausgewähltes Ausführungsbeispiel.

Bei dem in der Figur 3 dargestellten Ausführungsbeispiel gelangt das Betätigungsglied 22 in den Schließ-Stellbereich, wenn das Betätigungsglied 22 weg von der Anschlagstellung d gegen die Spannfeder 28 betätigt wird. Im Unterschied dazu ist bei dem in der Figur 10 gezeigten Ausführungsbeispiel die Stromschleife 73 elektrisch geschlossen, wenn sich das Betätigungsglied 22 in der Anschlagstellung d befindet. Mit Verstellung des Betätigungsglieds 22 gegen die Kraft der Spannfeder 28 überfährt die Blattfeder 50 den Überstand 72. Dabei wird die Stromschleife 73 geöffnet und das Betätigungsglied 22 gelangt in seinen Offen-Stellbereich.

Die **Figuren 11 und 12** zeigen beispielhaft eine besonders vorteilhafte Abwandlung der Kraftänderungseinrichtung 10.

Die in Figur 11 gezeigte Schnittebene ist in der Figur 12 mit XI - XI markiert. Die in Figur 12 dargestellte Schnittebene ist in der Figur 11 mit XII - XII markiert.

Bei dem in den Figuren 11 und 12 gezeigten Ausführungsbeispiel sind die Endbereiche 52 und 62 der beiden Blattfedern 50 und 60 fest an dem Betätigungsglied 22 angebracht. Die beiden festen Endbereiche 52 und 62 der beiden Blattfedern 50 und 60 sind fest und ständig mitteinander elektrisch verbunden. An den ersten Anschluß 24 ist eine Kontaktfläche 74 (Fig. 12) angeformt, und an den zweiten elektrischen Anschluß 26 ist eine zweite elektrische Kontaktfläche 76 angeformt (Fig. 12). Wenn das Betätigungsglied 22 in seinem Schließ-Stellbereich steht, dann hat der Endbereich 54 der Blattfeder 50 elektrischen Kontakt zu der Kontaktfläche 74 und der Endbereich 64 der Blattfeder 60 hat elektrischen Kontakt zu der Kontaktfläche 76. Im Schließ-Stellbereich ist die Stromschleife 73 elektrisch geschlossen und der Anschluß 24 hat über die Kontaktfläche 74, über den federnden Endbereich 54 der Blattfeder 50, über die Blattfeder 50, über den festen Endbereich 52, über den festen Endbereich 62, über die Blattfeder 60, über den federnden Endbereich 64, über die Kontaktfläche 76 elektrischen Kontakt zu dem zweiten Anschluß 26.

Die **Figur 13** zeigt ein weiteres, besonders vorteilhaftes, bevorzugt ausgewähltes Ausführungsbeispiel.

Das in der Figur 13 dargestellte Ausführungsbeispiel entspricht weitgehend dem in der Figur 3 gezeigten Ausführungsbeispiel, mit dem Unterschied, daß bei dem in der Figur 13 dargestellten Ausführungsbeispiel zusätzlich noch eine Abhebevorrichtung 80 vorgesehen ist.

Die Abhebevorrichtung 80 hat einen am Betätigungsglied 22 vorgesehenen Vorsprung 82. Der Vorsprung 82 ist so vorgesehen und so demissioniert, daß bei einer Verstellung des Betätigungsglieds 22 aus dem Schließ-Stellbereich in den Offen-Stellbereich die Blattfeder 50 von der Kontaktfläche 70 abgehoben wird, bevor der mit der Kontaktfläche 70 in elektrischen Kontakt stehende Endbereich 54 der Blattfeder 50 das Ende der Kontaktfläche 70 erreicht hat. Die Abhebevorrichtung 80 sorgt also dafür, daß der Endbereich 54 der Blattfeder 50 weder die Endkante 70a noch den Überstand 72 berührt oder daran anstößt. Dadurch erfolgt ein sehr schonendes Behandeln der Blattfedern 50 und 60, wodurch deren Dauerhaltbarkeit wesentlich erhöht wird.

Die Abhebevorrichtung 80 kann wahlweise auch so gestaltet sein, daß bei Verstellung des Betätigungsglieds 22 aus dem Schließ-Stellbereich in den Offen-Stellbereich auch der federnde Endbereich 64 der zweiten Blattfeder 60 von der Abhebevorrichtung 80 von der Kontaktfläche 70 abgehoben wird. Bei dem in der Figur 13 gezeigten Ausführungsbeispiel kann auf den Überstand 72 verzichtet werden.

Die **Figur 14** zeigt ein weiteres, bevorzugt ausgewähltes, besonders vorteilhaftes Ausführungsbeispiel.

In der Figur 14 ist im wesentlichen das gleiche wie in der Figur 11 dargestellt, mit dem Unterschied, daß bei dem in der Figur 14 gezeigten Ausführungsbeispiel zusätzlich noch eine Abhebevorrichtung 90 vorgesehen ist. Die Abhebevorrichtung 90 wird im wesentlichen von einem am Lagermittel 80 vorgesehenen Vorsprung 92 gebildet. Der Vorsprung 92 ist so demissioniert und so angeordnet, daß bei einer Verstellung des Betätigungsglieds 22 aus dem Schließ-Stellbereich in den Offen-Stellbereich der Endbereich 54 der Blattfeder 50 von der Kontaktfläche 74 abgehoben wird, bevor die Blattfeder 50 die Endkante der Kontaktfläche 74 erreicht hat. Bei Verstellung des Betätigungsgliedes 22 aus dem Offen-Stellbereich in den SchließStellbereich sorgt die Abhebevorrichtung 90 dafür, daß der Endbereich 54 der Blattfeder 50 erst dann auf die Kontaktfläche 74 herabgelassen wird, wenn sich der Endbereich 54 der Blattfeder 50 bereits über der Kontaktfläche 74 befindet, so daß die Blattfeder 50 weder an der Endkante der Kontaktfläche 74 noch an einem sonstigen Überstand anstoßen kann. Dadurch wird die Dauerhaltbarkeit der elektrischen Kontaktieren zwischen der Blattfeder 50 und der Kontaktfläche 74 wesentlich verlängert. Die Abhebevorrichtung 90 kann wahlweise auch so gestaltet sein, daß bei einer Verstellung des Betätigungsglieds 22 aus dem Schließ-Stellbereich in den Offen-Stellbereich damit auch zusätzlich der Endbereich 64 der zweiten Blattfeder 60 kontaktschonend von der Kontaktfläche 76 abgehoben wird.

## Patentansprüche

1. Pedalwertgeberanordnung mit einem an einem Chassis eines Kraftfahrzeugs gelagerten, zwischen einer Ruhestellung (a) und einer Endstellung (c) verstellbaren Pedal (6), mit einer zwischen der Ruhestellung (a) und der Endstellung (c) liegenden Zwischenstellung (b) des Pedals (6), mit einer das Pedal (6) in Richtung Ruhestellung (a) spannenden Rückstellfederanordnung (8), mit einer Kraftänderungseinrichtung (10), wobei die Kraftänderungseinrichtung (10) ein Lagermittel (20), ein in dem Lagermittel (20) verschiebbar gelagertes Betätigungsglied (22) und eine das Betätigungsglied (22) in eine Anschlagstellung (d) spannende Spannfeder (28) umfaßt, wobei bei einer Verstellung des Pedals (6) zwischen der Ruhestellung (a) und der Zwischenstellung (b) das Betätigungsglied (22) von der Spannfeder (28) in der Anschlagstellung (d) gehalten und bei einer Verstellung des Pedals (6) zwischen der Zwischenstellung (b) und der Endstellung (c) das Pedal (6) das Betätigungsglied (22) gegen die Spannfeder (28) von der Anschlagstellung (d) abhebt, wobei bei der Kraftänderungseinrichtung (10) eine über das Betätigungsglied (22) führende elektrische Stromschleife (73) vorgesehen ist, wobei das Betätigungsglied (22) einen Schließ-Stellbereich, in dem die Stromschleife (73) elektrisch geschlossen ist, und einen Offen-Stellbereich, in dem die Stromschleife (73) elektrisch unterbrochen ist, hat, mit einer an dem Betätigungsglied (22) angebrachten elektrisch leitenden Kontaktfläche (70), mit einem an dem Lagermittel (20) vorgesehenen ersten elektrischen Anschluß (24) **gekennzeichnet durch** mit einem an dem Lagermittel (20) vorgesehenen zweiten elektrischen Anschluß (26) und mit einer an dem Lagermittel (20) vorgesehenen, mit dem ersten elektrischen Anschluß (24) elektrisch verbundenen Blattfeder (50), wobei die Blattfeder (50) einen ersten Endbereich (52) und einen zweiten Endbereich (54) hat und der erste Endbereich (52) an dem Lagermittel (20) fixiert ist und der zweite Endbereich (54) infolge elastischer Biegung der Blattfeder (50) gegen das Betätigungsglied (22) gespannt ist, wobei in dem Schließ-Stellbereich die den ersten elektrischen Anschluß (24) mit dem zweiten elektrischen Anschluß (26) verbindende elektrische Stromschleife (73) **dadurch** geschlossen ist, daß der zweite Endbereich (54) der Blattfeder (50) die an dem Betätigungsglied (22) vorgesehene Kontaktfläche (70) kontaktiert und wobei in dem Offen-Stellbereich der zweite Endbereich (54) der Blattfeder (50) von der Kontaktfläche (70, 70') abgehoben hat.

2. Pedalwertgeberanordnung nach Anspruch 1, **dadurch gekennzeichnet, daß** die elektrische Stromschleife (73) durch eine mit dem zweiten elektrischen Anschluß (26) elektrisch verbundene zweite Blattfeder (60) führt, wobei die zweite Blattfeder (60) einen ersten Endbereich (62) und einen zweiten Endbereich (64) hat und der erste Endbereich (62) an dem Lagermittel (20) fixiert ist und der zweite Endbereich (64) infolge elastischer Biegung der zweiten Blattfeder (60) gegen das Betätigungsglied (22) gespannt ist, wobei der zweite Endbereich (64) der zweiten Blattfeder (60) mindestens in dem Schließ-Stellbereich die an dem Betätigungsglied (22) vorgesehene Kontaktfläche (70, 70') kontaktiert.

3. Pedalwertgeberanordnung nach Anspruch 2, **dadurch gekennzeichnet, daß** in dem Offen-Stellbereich der zweite Endbereich (64) der zweiten Blattfeder (60) von der Kontaktfläche (70) abgehoben hat.

4. Pedalwertgeberanordnung nach Anspruch 2, **dadurch gekennzeichnet, daß** in dem Offen-Stellbereich der zweite Endbereich (64) der zweiten Blattfeder (60) die Kontaktfläche (70') kontaktiert.

5. Pedalwertgeberanordnung nach einem der Ansprüche 1 bis 4, **dadurch gekennzeichnet, daß** die Kontaktfläche (70, 70') eine Endkante (70a) hat und an dem Betätigungsglied (22) ein über die Kontaktfläche (70, 70') in Richtung der Blattfeder (50) hinausgehender Überstand (72) vorgesehen ist, in der Weise, daß bei einer Verstellung des Betätigungsglieds (22) vom Offen-Stellbereich in den Schließ-Stellbereich der zweite Endbereich (54) der Blattfeder (50) die Endkante (70a) der Kontaktfläche (70, 70') nicht berührt.

6. Pedalwertgeberanordnung nach einem der Ansprüche 1 bis 4, **dadurch gekennzeichnet, daß** an dem Betätigungsglied (22) eine Abhebevorrichtung (80, 82) vorgesehen ist, die bei einer Verstellung des Betätigungsglieds (22) aus dem Schließ-Stellbereich in den Offen-Stellbereich den zweiten Endbereich (54) der Blattfeder (50) von der Kontaktfläche (70, 70') abhebt, in der Weise, daß der zweite Endbereich (54) der Blattfeder (50) keine Endkante der Kontaktfläche (70, 70') berührt.

7. Pedalwertgeberanordnung nach einem der Ansprüche 1 bis 6, **dadurch gekennzeichnet, daß** die erste Blattfeder (50) einstückig an den ersten elektrischen Anschluß (24) angeformt ist.

8. Pedalwertgeberanordnung mit einem an einem Chassis eines Kraftfahrzeugs gelagerten, zwischen einer Ruhestellung (a) und einer Endstellung (c) verstellbaren Pedal (6), mit einer zwischen der Ruhestellung (a) und der Endstellung (c) liegenden Zwischenstellung (b) des Pedals (6), mit einer das Pedal (6) in Richtung Ruhestellung (a) spannenden Rückstellfederanordnung (8), mit einer Kraftänderungseinrichtung (10), wobei die Kraftänderungseinrichtung (10) ein Lagermittel (20), ein in dem Lagermittel (20) verschiebbar gelagertes Betätigungsglied (22) und eine das Betätigungsglied (22) in eine Anschlagstellung (d) spannende Spannfeder (28) umfaßt, wobei bei einer Verstellung des Pedals (6) zwischen der Ruhestellung (a) und der Zwischenstellung (b) das Betätigungsglied (22) von der Spannfeder (28) in der Anschlagstellung (d) gehalten und bei einer Verstellung des Pedals (6) zwischen der Zwischenstellung (b) und der Endstellung (c) das Pedal (6) das Betätigungsglied (22) gegen die Spannfeder (28) von der Anschlagstellung (d) abhebt, wobei bei der Kraftänderungseinrichtung (10) eine über das Betätigungsglied (22) führende elektrische Stromschleife (73) vorgesehen ist, wobei das Betätigungsglied (22) einen Schließ-Stellbereich, in dem die Stromschleife (73) elektrisch geschlossen ist, und einen Offen-Stellbereich, in dem die Stromschleife (73) elektrisch unterbrochen ist, hat, mit einer an dem Lagermittel (20) angebrachten elektrisch leitenden Kontaktfläche (74), mit einem an dem Lagermittel (20) vorgesehenen, mit der Kontaktfläche (74) elektrisch verbundenen ersten elektrischen Anschluß (24) **gekennzeichnet durc**h mit einem an dem Lagermittel (20) vorgesehenen zweiten elektrischen Anschluß (26) und mit einer an dem Betätigungsglied (22) vorgesehenen Blattfeder (50), wobei die Blattfeder (50) einen ersten Endbereich (52) und einen zweiten Endbereich (54) hat und der erste Endbereich (52) an dem Betätigungsglied (22) fixiert ist und der zweite Endbereich (54) infolge elastischer Biegung der Blattfeder (50) gegen das Lagermittel (20) gespannt ist, wobei in dem Schließ-Stellbereich die den ersten elektrischen Anschluß (24) mit dem zweiten elektrischen Anschluß (26) verbindende elektrische Stromschleife (73) dadurch geschlossen ist, daß der zweite Endbereich (54) der Blattfeder (50) die an dem Lagermittel (20) vorgesehene Kontaktfläche (74) kontaktiert und wobei in dem Offen-Stellbereich der zweite Endbereich (54) der Blattfeder (50) von der Kontaktfläche (74) abgehoben hat.

9. Pedalwertgeberanordnung nach Anspruch 8, **dadurch gekennzeichnet, daß** an dem Lagermittel (20) eine mit dem zweiten elektrischen Anschluß (26) elektrisch verbundene zweite Kontaktfläche (76) und an dem Betätigungsglied (22) eine mit der Blattfeder (50) elektrisch verbundene zweite Blattfeder (60) vorgesehen sind, wobei die zweite Blattfeder (60) einen ersten Endbereich (62) und einen zweiten Endbereich (64) hat und der erste Endbereich (62) an dem Betätigungsglied (22) fixiert ist und der zweite Endbereich (64) infolge elastischer Biegung der zweiten Blattfeder (60) gegen das Lagermittel (20) gespannt ist, wobei der zweite Endbereich (64) der zweiten Blattfeder (60) mindestens in dem Schließ-Stellbereich die an dem Lagermittel (22) vorgesehene zweite Kontaktfläche (76) kontaktiert.

10. Pedalwertgeberanordnung nach Anspruch 9, **dadurch gekennzeichnet, daß** in dem Offen-Stellbereich der zweite Endbereich (64) der zweiten Blattfeder (60) von der zweiten Kontaktfläche (76) abgehoben hat.

11. Pedalwertgeberanordnung nach Anspruch 9, **dadurch gekennzeichnet, daß** in dem Offen-Stellbereich der zweite Endbereich (64) der zweiten Blattfeder (60) die zweite Kontaktfläche (76) kontaktiert.

12. Pedalwertgeberanordnung nach einem der Ansprüche 8 bis 11, **dadurch gekennzeichnet, daß** die Kontaktfläche (74) eine Endkante (70a) hat und an dem Lagermittel (20) ein über die Kontaktfläche (74) in Richtung der Blattfeder (50) hinausgehender Überstand (72) vorgesehen ist, in der Weise, daß bei einer Verstellung des Betätigungsglieds (22) vom Offen-Stellbereich in den Schließ-Stellbereich der zweite Endbereich (54) der Blattfeder (50) die Endkante (70a) der Kontaktfläche (74) nicht berührt.

13. Pedalwertgeberanordnung nach einem der Ansprüche 8 bis 12, **dadurch gekennzeichnet, daß** an dem Lagermittel (20) eine Abhebevorrichtung (90, 92) vorgesehen ist, die bei einer Verstellung des Betätigungsglieds (22) aus dem Schließ-Stellbereich in den Offen-Stellbereich den zweiten Endbereich (54) der Blattfeder (50) von der Kontaktfläche (74) abhebt, in der Weise, daß der zweite Endbereich (54) der Blattfeder (50) keine Endkante der Kontaktfläche (74) berührt.

14. Pedalwertgeberanordnung nach einem der Ansprüche 9 bis 13, **dadurch gekennzeichnet, daß** die erste Kontaktfläche (74) einstückig an den ersten elektrischen Anschluß (24) angeformt ist.

15. Pedalwertgeberanordnung nach einem der Ansprüche 1 bis 14, **dadurch gekennzeichnet, daß** die Spannfeder (28) das Betätigungsglied (22) in eine Spannrichtung in die Anschlagstellung (d) beaufschlagt und daß an dem Lagermittel (20) mindestens eine entgegen der Spannrichtung weisende Lagermittelhaltefläche (34a, 34b) und an dem Betätigungsglied (22) mindestens eine in die Spannrichtung weisende Betätigungsgliedhaltefläche (36a, 36b) sowie ein Halteelement (38) vorgesehen sind, wobei sich das Halteelement (38) zwischen der Lagermittelhaltefläche (34a, 34b) und der Betätigungsgliedhaltefläche (36a, 36b) befindet.

16. Pedalwertgeberanordnung nach Anspruch 15, **dadurch gekennzeichnet, daß** die Spannfeder (28) die Betätigungsgliedhaltefläche (36a, 36b) des Betätigungsglieds (22) gegen das Halteelement (38) und über die Betätigungsgliedhaltefläche (36a, 36b) das Halteelement (38) gegen die Lagermittelhaltefläche (34a, 34b) des Lagermittels (20) beaufschlagt.

17. Pedalwertgeberanordnung nach einem der Ansprüche 1 bis 16, **dadurch gekennzeichnet, daß** an dem Betätigungsglied (22) ein Querloch (40) vorgesehen ist, in dem sich eine Spreizfeder (42) und ein Rollkörper (44a) befinden, wobei die Spreizfeder (42) ein erstes Ende und ein zweites Ende hat, und das erste Ende der Spreizfeder (42) den Rollkörper (44a) gegen das Halteelement (38, 46a) beaufschlagt.

18. Pedalwertgeberanordnung nach Anspruch 17, **dadurch gekennzeichnet, daß** sich in dem Querloch (40) ein zweiter Rollkörper (44b) befindet und das zweite Ende der Spreizfeder (42) den zweiten Rollkörper (44b) gegen das Halteelement (38, 46b) beaufschlagt.

19. Pedalwertgeberanordnung nach einem der Ansprüche 15 bis 18, **dadurch gekennzeichnet, daß** das Halteelement (38) eine Stufe (46a, 46b) bildet, wobei bei einer Verstellung des Betätigungsglieds (22) der mindestens eine Rollkörper (44a, 46) entgegen der Kraft der Spreizfeder (42) über die Stufe (46a, 46b) gedrückt wird.

20. Pedalwertgeberanordnung nach einem der Ansprüche 15 bis 19, **dadurch gekennzeichnet, daß** das Halteelement (38) klammerartig geformt ist und einen ersten Schenkel (38a) sowie einen zweiten Schenkel (38b) hat, wobei sich die beiden Schenkel (38a, 38b) zwischen je einer Betätigungsgliedhaltefläche (36a, 36b) und je einer Lagermittelhaltefläche (34a, 34b) befinden.

21. Pedalwertgeberanordnung nach einem der vorhergehenden Ansprüche, **dadurch gekennzeichnet, daß** die Kraftänderungseinrichtung (10) an dem Chassis (14) angebracht ist und bei einer Verstellung des Pedals (6) zwischen der Zwischenstellung (b) und der Endstellung (c) das Pedal (6) das Betätigungsglied (22) beaufschlagt.

22. Pedalwertgeberanordnung nach einem der Ansprüche 1 bis 20, **dadurch gekennzeichnet, daß** die Kraftänderungseinrichtung (10) an dem Pedal (6) angebracht ist und bei einer Verstellung des Pedals (6) zwischen der Zwischenstellung (b) und der Endstellung (c) das Pedal (6) das Betätigungsglied (22) gegen das Chassis (14) beaufschlagt.

23. Pedalwertgeberanordnung nach einem der vorhergehenden Ansprüche, **dadurch gekennzeichnet, daß** bei in der Anschlagstellung (d) stehendem Betätigungsglied (22) die elektrische Stromschleife (73) geöffnet ist.

24. Pedalwertgeberanordnung nach einem der Ansprüche 1 bis 22, **dadurch gekennzeichnet, daß** bei in der Anschlagstellung (d) stehendem Betätigungsglied (22) die elektrische Stromschleife (73) geschlossen ist.

## Claims

1. Pedal value generator arrangement having a pedal (6) which is mounted on a chassis of a motor vehicle and can move between a rest position (a) and an end position (c), having an intermediate position (b) of the pedal (6) lying between the rest position (a) and the end position (c), having a restoring spring arrangement (8) which braces the pedal (6) in the direction of the rest position (a), having a force-changing device (10), the force-changing device (10) comprising a bearing means (20), an actuation element (22) which is displaceably mounted in the bearing means (20) and a tensioning spring (28) which braces the actuation element (22) into a stop position (d), the actuation element (22) being held in the stop position (d) by the tensioning spring (28) when the pedal (6) is moved between the rest position (a) and the intermediate position (b), and the pedal (6) lifting the actuation element (22) off from the stop position (d) against the tensioning spring (28) when the pedal (6) moves between the intermediate position (b) and the end position (c), an electrical current loop (73) which leads via the actuation element (22) being provided at the force-changing device (10), the actuation element (22) having a closing actuation region in which the current loop (73) is electrically closed, and an opening actuation region in which the current loop (73) is electrically interrupted, having an electrically conductive contact face (70) which is attached to the actuation element (22), having a first electrical connection (24) which is provided on the bearing means (20), **characterized by** a second electrical connection (26) which is provided on the bearing means (20), and a leaf spring (50) which is provided on the bearing means (20) and is electrically connected to the first electrical connection (24), the leaf spring (50) having a first end region (52) and a second end region (54), and the first end region (52) being secured to the bearing means (20), and the second end region (54) being braced against the actuation element (22) owing to elastic bending of the leaf spring (50), the electrical current loop (73) which connects the first electrical connection (24) to the second electrical connection (26) being closed in the closing actuation region by virtue of the fact that the second end region (54) of the leaf spring (50) is in contact with the contact face (70) which is provided on the actuation element (22), and the second end region (54) of the leaf spring (50) having lifted off from the contact face (70, 70') in the opening actuation region.

2. Pedal value generator arrangement according to Claim 1, **characterized in that** the electrical current loop (73) leads through a second leaf spring (60) which is electrically connected to the second electrical connection (26), the second leaf spring (60) having a first end region (62) and the second end region (64), and the first end region (62) being secured to the bearing means (20), and the second end region (64) being braced against the actuation element (22) owing to elastic bending of the second leaf spring (60), the second end region (64) of the second leaf spring (60) making contact, at least in the closing actuation region, with the contact face (70, 70') which is provided on the actuation element (22).

3. Pedal value generator arrangement according to Claim 2, **characterized in that**, in the opening actuation region, the second end region (64) of the second leaf spring (60) has lifted off from the contact face (70).

4. Pedal value generator arrangement according to Claim 2, **characterized in that**, in the opening actuation region, the second end region (64) of the second leaf spring (60) is in contact with the contact face (70').

5. Pedal value generator arrangement according to one of Claims 1 to 4, **characterized in that** the contact face (70, 70') has an end edge (70a), and a protruding section (72) which projects over the contact face (70, 70') in the direction of the leaf spring (50) is provided on the actuation element (22) in such a way that when the actuation element (22) is moved from the opening actuation region into the closing actuation region the second end region (54) of the leaf spring (50) is not in contact with the end edge (70a) of the contact face (70, 70').

6. Pedal value generator arrangement according to one of Claims 1 to 4, **characterized in that**, on the actuation element (22), a lifting-off device (80, 82) is provided which, when the actuation element (22) moves out of the closing actuation region into the opening actuation region lifts off the second end region (54) of the leaf spring (50) from the contact face (70, 70') in such a way that the second end region (54) of the leaf spring (50) is not in contact with any end edge of the contact face (70, 70').

7. Pedal value generator arrangement according to one of Claims 1 to 6, **characterized in that** the first leaf spring (50) is formed in one piece on the first electrical connection (24).

8. Pedal value generator arrangement having a pedal (6) which is mounted on a chassis of a motor vehicle and can move between a rest position (a) and an end position (c), having an intermediate position (b) of the pedal (6) lying between the rest position (a) and the end position (c), having a restoring spring arrangement (8) which braces the pedal (6) in the direction of the rest position (a), having a force-changing device (10), the force-changing device (10) comprising a bearing means (20), an actuation element (22) which is displaceably mounted in the bearing means (20) and a tensioning spring (28) which braces the actuation element (22) into a stop position (d), the actuation element (22) being held in the stop position (d) by the tensioning spring (28) when the pedal (6) is moved between the rest position (a) and the intermediate position (b), and the pedal (6) lifting the actuation element (22) off from the stop position (d) against the tensioning spring (28) when the pedal (6) moves between the intermediate position (b) and the end position (c), an electrical current loop (73) which leads via the actuation element (22) being provided at the force-changing device (10), the actuation element (22) having a closing actuation region in which the current loop (73) is electrically closed, and an opening actuation region in which the current loop (73) is electrically interrupted, having an electrically conductive contact face (74) which is attached to the bearing means (20), having a first electrical connection (24) which is provided on the bearing means (20) and is electrically connected to the contact face (74), **characterized by** a second electrical connection (26) which is provided on the bearing means (20), and a leaf spring (50) which is provided on the actuation element (22), the leaf spring (50) having a first end region (52) and a second end region (54), and the first end region (52) being secured to the actuation element (22), and the second end region (54) being braced against the bearing means (20) owing to elastic bending of the leaf spring (50), the electrical current loop (73) which connects the first electrical connection (24) to the second electrical connection (26) being closed in the closing actuation region by virtue of the fact that the second end region (54) of the leaf spring (50) is in contact with the contact face (74) which is provided on the bearing means (20), and the second end region (54) of the leaf spring (50) having lifted off from the contact face (74) in the opening actuation region.

9. Pedal value generator arrangement according to Claim 8, **characterized in that** a second contact face (76) which is electrically connected to the second electrical connection (26) is provided on the bearing means (20), and a second leaf spring (60) which is electrically connected to the leaf spring (50) is provided on the actuation element (22), the second leaf spring (60) having a first end region (62) and a second end region (64), and the first end region (62) being secured to the actuation element (22), and the second end region (64) being braced against the bearing means (20) owing to elastic bending of the second leaf spring (60), the second end region (64) of the second leaf spring (60) being in contact, at least in the closing actuation region, with the second contact phase (76) which is provided on the bearing means (20).

10. Pedal value generator arrangement according to Claim 9, **characterized in that**, in the opening actuation region, the second end region (64) of the second leaf spring (60) has lifted off from the second contact face (76).

11. Pedal value generator arrangement according to Claim 9, **characterized in that**, in the opening actuation region, the second end region (64) of the second leaf spring (60) is in contact with the second contact face (76).

12. Pedal value generator arrangement according to one of Claims 8 to 11, **characterized in that** the contact face (74) has an end edge (70a), and a protruding section (72) which projects over the contact face (74) in the direction of the leaf spring (50) is provided on the bearing means (20) in such a way that when the actuation element (22) is moved from the opening actuation region into the closing actuation region the second end region (54) of the leaf spring (50) is not in contact with the end edge (70a) of the contact face (74).

13. Pedal value generator arrangement according to one of Claims 8 to 12, **characterized in that** on the bearing means (20), a lifting-off device (90, 92) is provided which, when the actuation element (22) moves out of the closing actuation region into the opening actuation region lifts off the second end region (54) of the leaf spring (50) from the contact face (74) in such a way that the second end region (54) of the leaf spring (50) is not in contact with any end edge of the contact face (74).

14. Pedal value generator arrangement according to one of Claims 9 to 13, **characterized in that** the first contact face (74) is formed in one piece on the first electrical connection (24).

15. Pedal value generator arrangement according to one of Claims 1 to 14, **characterized in that** the tensioning spring (28) loads the actuation element (22) in a bracing direction into the stop position (d), and **in that** at least one bearing means securing face (34a, 34b) which points counter to the bracing direction is provided on the bearing means (20), and at least one actuation element securing face (36a, 36b) which points in the bracing direction and a securing element (38) are provided on the actuation element (22), the securing element (38) being located between the bearing means securing face (34a, 34b) and the actuation element securing face (36a, 36b).

16. Pedal value generator arrangement as claimed in claim 15, **characterized in that** the tensioning spring (28) loads the actuation element securing face (36a, 36b) of the actuation element (22) against the securing element (38) and against the bearing means securing face (34a, 34b) of the bearing means (20) via the actuation element securing face (36a, 36b).

17. Pedal value generator arrangement according to one of Claims 1 to 16, **characterized in that** a transverse hole (40) in which a spreading spring (42) and a rolling element (44a) are located is provided on the actuation element (22), the spreading spring (42) having a first end and a second end, and the first end of the spreading spring (42) loads the rolling element (44a) against the securing element (38, 46a).

18. Pedal value generator arrangement according to Claim 17, **characterized in that** a second rolling element (44b) is located in the transverse hole (40), and the second end of the spreading spring (42) loads the second rolling element (44b) against the securing element (38, 46b).

19. Pedal value generator arrangement according to one of Claims 15 to 18, **characterized in that** the securing element (38) forms a step (46a, 46b), the at least one rolling element (44a, 46) being pressed counter to the force of the spreading spring (42) by means of the step (46a, 46b) when the actuation element (22) is moved.

20. Pedal value generator arrangement according to one of Claims 15 to 19, **characterized in that** the securing element (38) is shaped in the manner of a clamp and has a first limb (38a) and a second limb (38b), the two limbs (38a, 38b) being located between one actuation element securing face (36a, 36b) and one bearing means securing face (34a, 34b) in each case.

21. Pedal value generator arrangement according to one of the preceding claims, **characterized in that** the force-changing device (10) is attached to the chassis (14), and when the pedal (6) moves between the intermediate position (b) and the end position (c) the pedal (6) loads the actuation element (22).

22. Pedal value generator arrangement according to one of Claims 1 to 20, **characterized in that** the force-changing device (10) is attached to the pedal (6), and when the pedal (6) moves between the intermediate position (b) and the end position (c) the pedal (6) loads the actuation element (22) against the chassis (14).

23. Pedal value generator arrangement according to one of the preceding claims, **characterized in that** when the actuation element (22) is in the stop position (d) the electrical current loop (73) is open.

24. Pedal value generator arrangement according to one of Claims 1 to 22, **characterized in that** when the actuation element (22) is in the stop position (d) the electrical current loop (73) is closed.

## Revendications

1. Disposition de détecteur de valeur de pédale comportant une pédale (6) mobile positionnée dans un châssis d'un véhicule automobile, réglable entre une position de repos (a) et une position finale (c), où une position intermédiaire (b) de la pédale (6) figure entre la position de repos (a) et la position finale (c), comprenant une disposition de ressort de rappel (8) poussant la pédale (6) en direction de la position de repos (a), avec un dispositif de modification de force (10) où le dispositif de modification de force (10) comprend un moyen de palier (20), un organe d'actionnement (22) logé de manière coulissante dans le moyen de palier (20) et un ressort de tension (28) poussant l'organe d'actionnement (22) dans une position en butée (d), où, par un déplacement de la pédale (6) entre la position de repos (a) et la position intermédiaire (b), l'organe d'actionnement (22) est maintenu par le ressort de tension (28) en position en butée (d) et, par un déplacement de la pédale (6) entre la position intermédiaire (b) et la position finale (c), la pédale (6) décolle l'organe d'actionnement (22), contre le ressort de tension (28), de la position en butée (d), ou au dispositif de modification de force (10) est prévue une boucle de courant électrique (73) passant au-dessus de l'organe d'actionnement (22), où l'organe d'actionnement (22) possède une zone de réglage en fermeture dans laquelle la boucle de courant (73) est électriquement fermée et une zone de réglage en ouverture dans laquelle la boucle de courant électrique (73) est électriquement interrompue, avec une surface de contact électrique (70) placée contre l'organe d'actionnement (22), avec un premier raccordement électrique (24) prévu au moyen de palier (20), **caractérisée en ce que**, avec un deuxième raccordement électrique (26) prévu au moyen de palier (20) et avec un ressort à lame (50) prévu au moyen de palier (20), électriquement raccordé avec le premier raccordement électrique (24), où le ressort à lame (50) possède une première zone d'extrémité (52) et une deuxième zone d'extrémité (54) et la première zone d'extrémité (52) est fixée au moyen de palier (20) et la deuxième zone d'extrémité (54) est tendue en raison de la flexion élastique du ressort à lame (50) contre l'organe d'actionnement (22), ce par quoi, dans la zone de réglage en fermeture, la boucle de courant (73) reliant le premier raccordement électrique (24) au deuxième raccordement électrique (26) est, de ce fait, fermée, que la deuxième zone d'extrémité (54) du ressort à lame (50) entre en contact avec la surface de contact (70) prévue à l'organe d'actionnement (22) et où, dans la zone de réglage en ouverture la deuxième zone d'extrémité (54) du ressort à lame (50) est décollée de la surface de contact (70, 70').

2. Disposition de détecteur de valeur de pédale selon la revendication 1,
**caractérisée en ce que**
la boucle de courant électrique (73) passe par un deuxième ressort à lame (60) raccordé électriquement avec le deuxième raccordement électrique (26), où le deuxième ressort à lame (60) possède une première zone d'extrémité (62) et une deuxième zone d'extrémité (64) et la première zone d'extrémité (62) est fixée au moyen de palier (20) et la deuxième zone d'extrémité (64) est tendue en raison de la flexion élastique du deuxième ressort à lame (60) contre l'organe d'actionnement (22), ce par quoi, la deuxième zone d'extrémité (64) du deuxième ressort à lame (60) entre en contact avec la surface de contact (70, 70') prévue à l'organe d'actionnement (22) au moins dans la zone de réglage en fermeture.

3. Disposition de détecteur de valeur de pédale selon la revendication 2,
**caractérisée en ce que**
dans la zone de réglage en ouverture, la deuxième zone d'extrémité (64) du deuxième ressort à lame (60) est décollée de la surface de contact (70, 70').

4. Disposition de détecteur de valeur de pédale selon la revendication 2,
**caractérisée en ce que**
dans la zone de réglage en ouverture, la deuxième zone d'extrémité (64) du deuxième ressort à lame (60) entre en contact avec la surface de contact (70, 70').

5. Disposition de détecteur de valeur de pédale selon l'une quelconque des revendications 1 à 4,
**caractérisée en ce que**
la surface de contact (70, 70') possède une arête d'extrémité (70a) et qu'un surplomb sortant (72) est prévu à l'organe d'actionnement (22), au-dessus de la surface de contact (70, 70'), en direction du ressort à lame (50), de manière telle que lors d'un déplacement de l'organe d'actionnement. (22) de la zone de réglage en ouverture vers la zone de réglage en fermeture, la deuxième zone d'extrémité (54) du ressort à lame (50) ne touche pas l'arête d'extrémité (70a) de la surface de contact (70, 70').

6. Disposition de détecteur de valeur de pédale selon l'une quelconque des revendications 1 à 4,
**caractérisée en ce qu'**
à l'organe d'actionnement (22), un dispositif de levage (80, 82) est prévu, qui lors d'un déplacement de l'organe d'actionnement (22) de la zone de réglage en fermeture vers la zone de réglage en ouverture, décolle la deuxième zone d'extrémité (54) du ressort à lame (50) de la surface de contact (70, 70') de manière telle que la deuxième zone d'extrémité (54) du ressort à lame (50) ne touche aucune arête d'extrémité de la surface de contact (70, 70').

7. Disposition de détecteur de valeur de pédale selon l'une quelconque des revendications 1 à 6,
**caractérisée en ce que**
le premier ressort à lame (50) est monobloc et rapporté par formage au premier raccordement électrique (24)

8. Disposition de détecteur de valeur de pédale comportant une pédale (6) mobile positionnée dans un châssis d'un véhicule automobile, réglable entre une position de repos (a) et une position finale (c), où une position intermédiare (b) de la pédale (6) figure entre la position de repos (a) et la position finale (c), comprenant une disposition de ressort de rappel (8) poussant la pédale (6) en direction de la position de repos (a), avec un dispositif de modification de force (10) où le dispositif de modification de force (10) comprend un moyen de palier (20), un organe d'actionnement (22) logé de manière coulissante dans le moyen de palier (20) et un ressort de tension (28) poussant l'organe d'actionnement (22) dans une position en butée (d), où, par un déplacement de la pédale (6) entre la position de repos (a) et la position intermédiaire (b), l'organe d'actionnement (22) est maintenu par le ressort de tension (28) en position en butée (d) et par un déplacement de la pédale (6) entre la position intermédiaire (b) et la position finale (c), la pédale (6) décolle l'organe d'actionnement (22), contre le ressort de tension (28), de la position en butée (d), où au dispositif de modification de force (10) est prévue une boucle de courant électrique (73) passant au-dessus de l'organe d'actionnement (22), où l'organe d'actionnement (22) possède une zone de réglage en fermeture dans laquelle la boucle de courant (73) est électriquement fermée et une zone de réglage en ouverture dans laquelle la boucle de courant électrique (73) est électriquement interrompue, avec une surface de contact électrique (74) placée contre l'organe d'actionnement (22), avec un premier raccordement électrique (24) prévu au moyen de palier (20), raccordé électriquement avec la surface de contact électrique (74), **caractérisée en ce que**, avec un deuxième raccordement électrique (26) prévu au moyen de palier (20) et avec un ressort à lame (50) prévu à l'organe d'actionnement (22), où le ressort à lame (50) possède une première zone d'extrémité (52) et une deuxième zone d'extrémité (54) et la première zone d'extrémité (52) est fixée à l'organe d'actionnement (22), et la deuxième zone d'extrémité (54) est tendue en raison de la flexion élastique du ressort à lame (50) contre le moyen de palier (20), ce par quoi, dans la zone de réglage en fermeture la boucle de courant (73) reliant le premier raccordement électrique (24) au deuxième raccordement électrique (26) est, de ce fait, fermée, que la deuxième zone d'extrémité (54) du ressort à lame (50) entre en contact avec la surface de contact (74) prévue au moyen de palier (20) et où, dans la zone de réglage en ouverture la deuxième zone d'extrémité (54) du ressort à lame (50) est décollée de la surface de contact (74).

9. Disposition de détecteur de valeur de pédale selon la revendication 8,
**caractérisée en ce qu'**
au moyen de palier (20), une deuxième surface de contact (76) raccordée électriquement au deuxième raccordement électrique (26) et à l'organe d'actionnement (22), un deuxième ressort à lame (60) raccordée électriquement avec le premier ressort à lame (50) est prévu, où le deuxième ressort à lame (60) possède une première zone d'extrémité (62) et une deuxième zone d'extrémité (64) et la première zone d'extrémité (62) est fixée à l'organe d'actionnement (22) et la deuxième zone d'extrémité (64) est poussée en raison de la flexion élastique du deuxième ressort à lame (60) contre le moyen de palier (20), ce par quoi, la deuxième zone d'extrémité (64) du deuxième ressort à lame (60) entre en contact avec la deuxième surface de contact (76) prévue à l'organe d'actionnement (22) au moins dans la zone de réglage en fermeture.

10. Disposition de détecteur de valeur de pédale selon la revendication 9,
**caractérisée en ce que**
dans la zone de réglage en ouverture, la deuxième zone d'extrémité (64) du deuxième ressort à lame (60) est décollée de la deuxième surface de contact (76).

11. Disposition de détecteur de valeur de pédale selon la revendication 9,
**caractérisée en ce que**
dans la zone de réglage en ouverture, la deuxième zone d'extrémité (64) du deuxième ressort à lame (60) entre en contact avec la deuxième surface de contact (76).

12. Disposition de détecteur de valeur de pédale selon l'une quelconque des revendications 8 à 11,
**caractérisée en ce que**
la surface de contact (74) possède une arête d'extrémité (70a) et qu'un surplomb sortant (72) est prévu au moyen de palier (20) au-dessus de la surface de contact (74) en direction du ressort à lame (50), de manière telle que lors d'un déplacement de l'organe d'actionnement (22) de la zone de réglage en ouverture vers la zone de réglage en fermeture, la deuxième zone d'extrémité (54) du ressort à lame (50) ne touche pas l'arête d'extrémité (70a) de la surface de contact (74).

13. Disposition de détecteur de valeur de pédale selon l'une quelconque des revendications 8 à 12,
**caractérisée en ce qu'**
au moyen de palier (20), un dispositif de levage (90, 92) est prévu, qui lors d'un déplacement de l'organe d'actionnement (22) de la zone de réglage en fermeture vers la zone de réglage en ouverture, décolle la deuxième zone d'extrémité (54) du ressort à lame (50) de la surface de contact (74) de manière telle la deuxième zone d'extrémité (54) du ressort à lame (50) ne touche aucune arête d'extrémité de la surface de contact (74).

14. Disposition de détecteur de valeur de pédale selon l'une quelconque des revendications 9 à 13,
**caractérisée en ce que**
la première surface de contact (74) est monobloc et rapportée par formage au premier raccordement électrique (24)

15. Disposition de détecteur de valeur de pédale selon l'une quelconque des revendications 1 à 14,
**caractérisée en ce que**
le ressort de tension (28) met en appui l'organe d'actionnement (22) en une direction de tension en position d'appui (d) et qu'au moyen de palier (20) au moins une surface de maintien de moyen de palier (34a, 34b) dirigée en la direction opposée à la direction de tension et qu'à l'organe d'actionnement (22) au moins une surface de maintien d'organe d'actionnement (36a, 36b) dirigée dans la direction de tension ainsi qu'un élément de maintien (38) sont prévus, l'élément de maintien (38) figurant entre la surface de maintien de moyen de palier (34a, 34b) et la surface de maintien d'organe d'actionnement (36a, 36b).

16. Disposition de détecteur de valeur de pédale selon la revendication 15,
**caractérisée en ce que**
le ressort de tension (28) met en appui la surface de maintien d'organe d'actionnement (36a, 36b) de l'organe d'actionnement (22) contre l'élément de maintien (38) et par la surface de maintien d'organe d'actionnement (36a, 36b), l'élément de maintien (38) contre la surface de maintien de moyen de palier (34a, 34b) de l'organe d'actionnement (20).

17. Disposition de détecteur de valeur de pédale selon l'une quelconque des revendications 1 à 16,
**caractérisée en ce qu'**
à l'organe d'actionnement (22), est prévu un trou transversal (40) dans lequel figurent un ressort écarteur (42) et un élément de roulement (44a), le ressort écarteur (42) ayant une première extrémité et une deuxième extrémité, et que la première extrémité du ressort écarteur (42) plaquant l'élément de roulement (44a) contre l'élément de maintien (38, 46a).

18. Disposition de détecteur de valeur de pédale selon la revendication 17,
**caractérisée en ce que**
dans le trou transversal (40), figure un deuxième élément de roulement (44b), et que la deuxième extrémité du ressort écarteur (42) plaque le deuxième élément de roulement (44b) contre l'élément de maintien (38, 46b).

19. Disposition de détecteur de valeur de pédale selon l'une quelconque des revendications 15 à 18,
**caractérisée en ce que**
l'élément de maintien (38) forme une marche (46a, 46b), ce par quoi, lors du déplacement de l'organe d'actionnement (22), l'élément de roulement (44a, 46 ) dont un au moins existe, est poussé, contre la force du ressort écarteur (42), au-dessus de la marche (46a, 46b).

20. Disposition de détecteur de valeur de pédale selon l'une quelconque des revendications 15 à 19,
**caractérisée en ce que**
l'élément de maintien (38) est en forme de pince et possède une première hanche (38a) ainsi qu'une deuxième hanche (38b), les deux hanches (38a, 38b) figurant chacune entre une surface de maintien d'organe d'actionnement (36a, 36b) et une surface de maintien de moyen de palier (34a, 34b),

21. Disposition de détecteur de valeur de pédale selon l'une quelconque des revendications précédentes,
**caractérisée en ce que**
le dispositif de modification de force (10) est disposé au châssis (14) et que lors d'un déplacement de la pédale (6) entre la position intermédiaire (b) et la position finale (c), la pédale (6) vient en appui sur l'organe d'actionnement (22).

22. Disposition de détecteur de valeur de pédale selon l'une quelconque des revendications 1 à 20,
**caractérisée en ce que**
le dispositif de modification de force (10) est disposé à la pédale (6) et que lors d'un déplacement de la pédale (6) entre la position intermédiaire (b) et la position finale (c), de la pédale (6) plaque l'organe d'actionnement (22) contre le châssis(14).

23. Disposition de détecteur de valeur de pédale selon l'une quelconque des revendications précédentes,
**caractérisée en ce que**
lorsque l'organe d'actionnement (22) est dans la position de butée (d), la boucle de courant électrique (73) est ouverte.

24. Disposition de détecteur de valeur de pédale selon l'une quelconque des revendications 1 à 22,
**caractérisée en ce que**
lorsque l'organe d'actionnement (22) est dans la position de butée (d), la boucle de courant électrique (73) est fermée.
